# EUROPÄISCHE PATENTSCHRIFT

(11) **EP 2 608 873 B1**
(45) Veröffentlichungstag und Bekanntmachung des Hinweises auf die Patenterteilung: **12.01.2022**
(21) Anmeldenummer: 11737888.5
(22) Anmeldetag: 17.06.2011
(51) Int. Cl.: B01D 63/06, B01D 67/00, B01D 69/08, D01D 4/08, D01D 5/24, B29C 48/11, B29C 48/335

(54) **SPINNDÜSENEINHEIT, VERFAHREN ZUR HERSTELLUNG EINER MEHRKANALMEMBRAN MITTELS EINER SPINNDÜSENEINHEIT UND VERWENDUNG DER SPINNDÜSENEINHEIT**
A SPINNERET UNIT, A METHOD FOR PRODUCING A MULTI-CHANNEL MEMBRANE WITH THE SPINNERET UNIT AND USE OF THE SPINNERET UNIT
UNE UNITÉ DE FILIÈRE, UNE MÉTHODE POUR PRODUIRE UNE MEMBRANE MULTICANAUX AVEC L'UNITÉ DE FILIÈRE ET L'UTILISATION DE L'UNITÉ DE FILIÈRE

(30) Priorität: 27.08.2010 DE 102010035698
(43) Veröffentlichungstag der Anmeldung: 03.07.2013
(73) Patentinhaber: Oechsle, Dietmar, 73529 Schwäbisch Gmünd (DE)
(72) Erfinder: DAHLBERG, Christian, 72658 Bempflingen (DE); OECHSLE, Dietmar, 73529 Schwäbisch Gmünd (DE); MÜLLER, Erik, 70190 Stuttgart (DE); WIETSCHORKE, Werner, 70190 Stuttgart (DE)
(74) Vertreter: Daub, Thomas
(86) Internationale Anmeldenummer: PCT/EP2011/003015
(87) Internationale Veröffentlichungsnummer: WO 2012/025168

(56) Entgegenhaltungen:
- DE-A1- 3 022 313
- FR-A1- 2 616 812
- US-A- 5 046 936
- US-B1- 6 787 216

## Beschreibung

### Stand der Technik

Die Erfindung betrifft eine Spinndüseneinheit, ein Verfahren zur Herstellung einer Mehrkanalmembran mittels einer Spinndüseneinheit und die Verwendung der Spinndüseneinheit zum Herstellen einer Mehrkanalmembran.

FR 2 616 812 A1, US 5 046 936 A und DE 30 22 313 A1 offenbaren Spinndüseneinheiten für die Herstellung von Mehrkanalmembranen. US 6 787 216 B1 offenbart Mehrkanalmembranen und Herstellungsverfahren dafür.

Es ist bereits eine Mehrkanalmembran, insbesondere zur Flüssigkeitsaufbereitung, mit zumindest einer Membranaußenfläche und einer Membraninnenfläche, die zumindest zwei längs verlaufende Innenkanäle ausbildet, die von der Membranaußenfläche umgeben sind, vorgeschlagen worden.

### Vorteile der Erfindung

Die hergestellte Membran ist einer Mehrkanalmembran, insbesondere zur Flüssigkeitsaufbereitung, mit zumindest einer Membranaußenfläche und einer Membraninnenfläche, die zumindest zwei längs verlaufende Innenkanäle ausbildet, die von der Membranaußenfläche umgeben sind.

Es wird vorgeschlagen, dass die Membranaußenfläche und die Membraninnenfläche jeweils eine trennaktive Schicht ausbilden. Dadurch kann eine vielseitige Anwendbarkeit realisiert werden, wodurch Einsatzbereiche der Mehrkanalmembran erweitert werden können. Vorzugsweise ist die Mehrkanalmembran bei einem Permeatfluss von innen nach außen, also zuerst durch die Membraninnenfläche und dann durch die Membranaußenfläche, und bei einem Permeatfluss von außen nach innen, also zuerst durch die Membranaußenfläche und dann durch die Membraninnenfläche, verwendbar. Somit kann ein Feed, also eine zu filternde Flüssigkeit oder das Permeat, also eine gefilterte Flüssigkeit in den Innenkanälen geführt werden. Die trennaktive Schicht ist vorteilhafterweise als eine filtrationsaktive Schicht ausgebildet. Unter einer "trennaktiven Schicht" soll insbesondere eine Schicht verstanden werden, die in Bezug auf ein Durchdringen einen Widerstand für zumindest eine erste Komponente insbesondere einer Flüssigkeit darstellt. Vorteilhafterweise stellt die trennaktive Schicht für zumindest eine zweite Komponente der Flüssigkeit zumindest im Wesentlichen keinen Widerstand bezüglich des Durchdringens dar. Die trennaktive Schicht lässt vorzugsweise unterschiedliche Komponenten insbesondere einer Flüssigkeit unterschiedlich gut passieren. Unter einer " ersten Komponente" soll in diesem Zusammenhang insbesondere eine Komponente verstanden werden, die aus einer Flüssigkeit herausgefiltert werden soll bzw. herausgefiltert wird, wie beispielsweise Partikel und/oder Mikroorganismen. Vorzugsweise trennt die trennaktive Schicht zwei unterschiedlich große Komponenten voneinander.

Vorteilhafterweise weist die trennaktive Schicht eine am kleinsten ausgebildete mittlere Porengröße der Mehrkanalmembran auf. Unter einer "mittleren Porengröße" soll insbesondere ein Mittelwert einer Porengrößenverteilung der Membranaußenfläche und/oder Membraninnenfläche verstanden werden. Unter einer Porengröße soll insbesondere auch ein Porendurchmesser verstanden werden. Vorzugsweise definiert die mittlere Porengröße insbesondere der trennaktiven Schicht eine Abscheiderate der Mehrkanalmembran. Vorteilhafterweise weist die Mehrkanalmembran eine mittlere Porengröße bzw. eine Abscheiderate zwischen 0,001 Mikrometer und 4 Mikrometer und besonders vorteilhaft zwischen 0,01 Mikrometer und 2 Mikrometer auf. Vorteilhafterweise weist die Mehrkanalmembran eine Abscheiderate von bis zu 2000 Dalton auf, wodurch die Mehrkanalmembran eine erste Komponente mit einem Molekulargewicht von bis zu 2000 Dalton bzw. 2000 u herausfiltern kann. Die Mehrkanalmembran kann vorzugsweise zur Nanofiltration, Ultrafiltration und/ oder Mikrofiltration verwendet werden. Vorzugsweise weist die trennaktive Schicht an der Membranaußenfläche einen Widerstand gegenüber der ersten Komponente auf, der sich von einem Widerstand gegenüber der ersten Komponente von der trennaktiven Schicht an der Membraninnenfläche unterscheidet. Grundsätzlich kann der Widerstand gegenüber der ersten Komponente von den trennaktiven Schichten auch gleich sein.

Die Membranaußenfläche ist vorzugsweise als eine Membranau-ßenwand ausgebildet. Die Membraninnenfläche ist vorzugsweise als eine Innenkanalwand ausgebildet. Unter einer "Membranaußenfläche" soll insbesondere eine Fläche verstanden werden, die die Innenkanäle zumindest teilweise umgibt. Die Membranaußenfläche ist vorzugsweise längs verlaufend. Vorzugsweise bildet die Membranaußenfläche eine zylindrische Fläche aus. Vorteilhafterweise ist die zylindrische Membranaußenfläche als eine Mantelfläche eines Zylinders ausgebildet. Die Mehrkanalmembran ist vorzugsweise als eine Mehrkanal-Hohlfasermembran ausgebildet. Vorzugsweise erfolgt eine Bildung der zwei trennaktiven Schichten durch Koagulierung durch ein einziges Koaguliermittel. Vorteilhafterweise wird die Mehrkanalmembran durch Extrudieren einer Polymerlösung direkt ins Koaguliermittel hergestellt. Das einzige Koaguliermittel weist dabei vorzugsweise eine flüssige Form auf. Vorteilhafterweise weisen die Innenkanäle jeweils eine Haupterstreckungsrichtung auf, die zumindest im Wesentlichen parallel zu einer Haupterstreckungsrichtung der Mehrkanalmembran angeordnet sind. Vorteilhafterweise weist der längs verlaufende Innenkanal einen Innenkanaldurchmesser auf, der zwischen 0,3 Millimeter und 3 Millimeter und besonders vorteilhaft zwischen 0,5 Millimeter und 2 Millimeter liegt. Vorzugsweise weist die Mehrkanalmembran einen Mehrkanalmembrandurchmesser auf, der zwischen 1 Millimeter und 10 Millimeter und besonders vorteilhaft zwischen 2 Millimeter und 8 Millimeter liegt.

Weiter wird vorgeschlagen, dass die Membraninnenfläche drei Innenkanäle ausbildet. Dadurch kann eine vorteilhafte Packungsdichte realisiert werden. Darüber hinaus kann eine höhere Effizienz der Mehrkanalmembran erreicht werden. Die Innenkanäle sind vorzugsweise symmetrisch zueinander angeordnet. In einer symmetrischen Anordnung liegen vorteilhafterweise Mittelpunkte der Innenkanäle auf einer Kreislinie, besonders vorteilhaft an drei Ecken eines gleichseitigen Dreiecks. Vorteilhafterweise sind die Innenkanäle nicht in Reihe angeordnet.

Ferner wird vorgeschlagen, dass die Mehrkanalmembran eine Stützschicht aufweist, die von der trennaktiven Schicht an der Membranaußenfläche umgeben ist und die die trennaktive Schicht an der Membraninnenfläche umgibt, wobei die Stützschicht eine zumindest im Wesentlichen konstante Porosität aufweist. Dadurch kann eine besonders vorteilhafte Stabilität der Mehrkanalmembran erreicht werden, wodurch eine Verarbeitung und/oder eine Herstellung durch Maschinen ermöglicht werden kann. Die Porosität der Stützschicht ist insbesondere entlang ihres Querschnitts zumindest im Wesentlichen konstant.

Insbesondere ist es vorteilhaft, wenn eine mittlere Porengröße der trennaktiven Schichten zumindest um etwa das zehnfache kleiner ist als eine mittlere Porengröße der Stützschicht. Dadurch kann eine besonders vorteilhafte Mehrkanalmembran bereitgestellt werden. Vorteilhafterweise liegt die mittlere Porengröße der Stützschicht zwischen 1 und 40 Mikrometer und besonders vorteilhaft zwischen 5 und 15 Mikrometer.

Die Erfindung geht von einer Spinndüseneinheit nach Anspruch 1 aus, insbesondere zur Herstellung einer Mehrkanalmembran, mit zumindest einer Extrusionseinheit, die zur Führung einer Polymerlösung zumindest einen Extrusionsraum ausbildet, und mit zumindest einer Innenfluideinbringeinheit, die zur Führung eines Innenfluids zumindest zwei innerhalb des Extrusionsraums angeordnete Kanäle aufweist.

Es wird vorgeschlagen, dass die Innenfluideinbringeinheit zumindest ein Stützelement aufweist, das innerhalb des Extrusionsraums angeordnet ist. Dadurch kann die Mehrkanalmembran besonders einfach hergestellt werden. Vorzugsweise bildet die Extrusionseinheit eine zumindest teilweise zylindrische Einheit aus. Vorteilhafterweise sind die Kanäle längs verlaufend. Unter einem "Extrusionsraum" soll ein Raum verstanden werden, in dem die Polymerlösung geführt bzw. extrudiert wird. Vorteilhafterweise ist der Extrusionsraum, als der größte Raum innerhalb der Spinndüseneinheit, insbesondere als der größte Raum innerhalb der Extrusionseinheit, der zur Führung der Polymerlösung vorgesehen ist, ausgebildet. Der Extrusionsraum weist vorzugsweise eine Haupterstreckungsrichtung auf, die parallel zu einer Haupterstreckungsrichtung der Innenkanaleinheit, insbesondere parallel zu einer Haupterstreckungsrichtung der Kanäle angeordnet ist. Unter "innerhalb des Extrusionsraums" soll insbesondere eine Anordnung verstanden werden, bei der das innerhalb angeordnete Element von einer Wandung der Extrusionseinheit umgeben ist. Die innerhalb des Extrusionsraums angeordneten Elemente treten vorteilhafterweise in einem Extrusionsvorgang mit der

Polymerlösung in Kontakt. In dem Extrusionsvorgang sind die innerhalb des Extrusionsraums angeordneten Kanäle von der Polymerlösung, vollständig umgeben.

Unter einem "Stützelement" soll insbesondere ein Element verstanden werden, das durch ihre Steifigkeit zumindest die Innenkanaleinheit positionsfest fixiert. Vorteilhafterweise nimmt das Stützelement eine Kraft, insbesondere eine durch ein extrudierende bzw. fließende Polymerlösung resultierende Kraft auf und leitet diese Kraft insbesondere auf die Extrusionseinheit weiter. Das Stützelement besteht vorzugsweise aus dem gleichen Material wie die Innenkanaleinheit. Das Stützelement ist insbesondere kein Filterelement. Das zumindest eine Stützelement positioniert vorzugsweise die Kanäle in dem Extrusionsraum. Vorteilhafterweise weisen die Kanäle jeweils eine Haupterstreckungsrichtung auf, die parallel zu einer Haupterstreckungsrichtung der Extrusionseinheit angeordnet ist. Vorzugsweise weist das zumindest eine Stützelement eine strömungsfördernde Form auf. Unter einer "strö-mungsfördernden Form" soll insbesondere eine Form verstanden werden, die entweder eine Strömung zumindest im Wesentlichen unbeeinflusst lässt oder die Strömung verbessert, insbesondere die Strömung homogenisiert. Die strömungsfördernde Form verursacht insbesondere keine Strömungswirbel. Vorteilhafterweise weist das zumindest eine Stützelement eine in eine Extrusionsrichtung weisende Erstreckung auf, die wesentlich kleiner ist als eine in die Extrusionsrichtung weisende Erstreckung des Extrusionsraums. Dadurch kann eine besonders vorteilhafte Mehrkanalmembran bereitgestellt werden. Unter einer "wesentlich kleineren Erstreckung" soll insbesondere eine Erstreckung verstanden werden, die zumindest eine Eigenschaft einer aus der Polymerlösung entstehenden Mehrkanalmembran zumindest im Wesentlichen unverändert lässt. Vorteilhafterweise beträgt die Erstreckung des Stützelements in Extrusionsrichtung weniger als 20%, besonders vorteilhaft weniger als 10% und ganz besonders vorteilhaft weniger als 5% der Erstreckung des Extrusionsraums in Extrusionsrichtung.

Zumindest eine Stützelement weist eine in eine Richtung entlang der Kanäle und damit entlang des Extrusionsraums verjüngende Form auf. Das zumindest eine Stützelement weist die verjüngende Form in die Extrusionsrichtung auf.

Unter einer "Extrusionsrichtung" soll insbesondere eine Richtung verstanden werden, die einer Richtung der extrudierten Polymerlösung, insbesondere in dem Extrusionsraum entspricht. Unter einer "verjüngenden Form" soll insbesondere eine abnehmende bzw. kleiner werdende Form verstanden werden. Die verjüngende Form ist vorzugsweise als eine abnehmende Breite des Stützelements ausgebildet. Unter einer "Breite des Stützelements" soll insbesondere eine Erstreckung des Stützelements verstanden werden, die entlang eines Querschnitts, d.h. die senkrecht zu einer Längsachse der Kanäle und damit senkrecht zu der Extrusionsrichtung verläuft.

Die Extrusionseinheit weist zumindest einen Polymerlösungszulauf auf und zumindest eine Stützelement in einer Extrusionsrichtung ist nach dem Polymerlösungszulauf angeordnet. ders vorteilhafte Anordnung des zumindest einem Stützelements realisiert werden.

Die Innenfluideinbringeinheit weist zumindest eine Innenfluidaustrittsöffnung auf, die innerhalb des Extrusionsraums angeordnet ist. Dadurch kann eine besonders vorteilhafte Spinndüseneinheit bereitgestellt werden.

Die Extrusionseinheit weist zumindest eine Polymerlösungsaustrittsöffnung auf und das Stützelement weist zumindest eine Durchgangsöffnung auf, die dazu vorgesehen ist, den Polymerlösungszulauf und die Polymerlösungsaustrittsöffnung strömungstechnisch zu verbinden.

Dadurch kann das Stützelement besonders einfach hergestellt werden. Unter einer "Durchgangsöffnung" soll in diesem Zusammenhang insbesondere eine Öffnung verstanden werden, die in zumindest einem Schnitt, insbesondere in einem Querschnitt vollständig von Material des Stützelements umgeben ist.

Zumindest eine Stützelement ist stegförmig ausgebildet.

Dadurch kann ein besonders vorteilhaftes Stützelement bereitgestellt werden.

Der Extrusionsraum ist zumindest teilweise trichterförmig ausgebildet.

Dadurch kann eine vorteilhafte Strömung der Polymerlösung realisiert werden.

Zudem wird erfindungsgemäß ein Verfahren zur Herstellung einer Mehrkanalmembran nach Anspruch 2 mittels der Spinndüseneinheit nach Anspruch 1 vorgeschlagen, bei dem eine Polymerlösung zur Ausbildung einer Membranaußenfläche der Mehrkanalmembran extrudiert wird, wobei zur Ausbildung einer Membraninnenfläche der Mehrkanalmembran die Polymerlösung zwischen zumindest zwei Kanälen extrudiert wird und durch die zumindest zwei Kanäle ein Innenfluid geführt wird, welches von der extrudierenden Polymerlösung strömungstechnisch getrennt ist, wobei die Membraninnenfläche und die Membranaußenfläche der Mehrkanalmembran eine trennaktive Schicht bilden. Dadurch kann die Mehrkanalmembran besonders vorteilhaft hergestellt werden. Vorzugsweise bildet die Membranaußenfläche eine zylindrische Fläche aus. Vorteilhafterweise bilden drei Innenkanalflächen die Membraninnenfläche aus, d.h. die Polymerlösung wird zwischen drei Kanälen extrudiert. Die Innenkanalflächen bilden vorteilhafterweise jeweils eine zylindrische Fläche aus. Vorteilhafterweise wird die Polymerlösung mit einer Extrusionsgeschwindigkeit extrudiert, die zwischen 0,5 Meter pro Minute und 15 Meter pro Minute, und besonders vorteilhaft zwischen 1 Meter pro Minute und 10 Meter pro Minute liegt.

Vorzugsweise besteht die Polymerlösung aus den Bestandteilen Polyethersolfon, N-Methyl-2-pyrrolidon und Polyvinylpirrolidon. Besonders bevorzugt besteht die Polymerlösung aus den Bestandteilen Polyethersolfon, N-Methyl-2-pyrrolidon, Polyvinylpirrolidon, Wasser und Glycerin. Vorteilhafterweise weist die Polymerlösung einen prozentualen Anteil von Polyethersolfon auf, der zwischen 3% und 40% und besonders vorteilhaft zwischen 5% und 35% liegt. Vorteilhafterweise weist die Polymerlösung einen prozentualen Anteil von N-Methyl-2-pyrrolidon auf, der zwischen 40% und 90% und besonders vorteilhaft zwischen 50% und 80% liegt. Vorteilhafterweise weist die Polymerlösung einen prozentualen Anteil von Polyvinylpirrolidon auf, der zwischen 3% und 40% und besonders vorteilhaft zwischen 5%und 30% liegt. Vorteilhafterweise weist die Polymerlösung einen prozentualen Anteil von Wasser auf, der zwischen 0% und 20% und besonders vorteilhaft zwischen 1% und 10% liegt. Vorteilhafterweise weist die Polymerlösung einen prozentualen Anteil von Glycerin auf, der zwischen 0% und 20% und besonders vorteilhaft zwischen 1% und 10% liegt.

Vorzugsweise besteht das Innenfluid zumindest teilweise aus Wasser. Vorteilhafterweise besteht das Innenfluid aus zumindest einem Bestandteil und besonders vorteilhaft aus zumindest zwei Bestandteilen. Das Innenfluid besteht vorzugsweise aus dem Bestandteil Wasser und besonders bevorzugt aus den Bestandteilen Wasser und N-Methyl-2-pyrrolidon. Vorteilhafterweise weist das Innenfluid, das aus den Bestandteilen Wasser und N-Methyl-2-pyrrolidon besteht einen prozentualen Anteil von Wasser auf, der zwischen 10% und 90% und besonders vorteilhaft zwischen 20% und 80% liegt. Vorteilhafterweise weist das Innenfluid, das aus den Bestandteilen Wasser und N-Methyl-2-pyrrolidon besteht einen prozentualen Anteil von N-Methyl-2-pyrrolidon auf, der zwischen 10% und 90% und besonders vorteilhaft zwischen 20% und 80% liegt.

Weiter wird vorgeschlagen, dass eine mittlere Porengröße der trennaktiven Schicht an der Membraninnenfläche und/ oder eine mittlere Porengröße der trennaktiven Schicht an der Membranaußenfläche bedarfsgerecht eingestellt werden. Dadurch kann eine Mehrkanalmembran hergestellt werden, die auf einen Bedarf bzw. an einen Anwendungsbereich angepasst ist. Vorteilhafterweise sind die trennaktiven Schichten unabhängig voneinander einstellbar. Vorteilhafterweise unterscheidet sich die mittlere Porengröße der trennaktiven Schicht an der Membranaußenfläche von der mittleren Porengröße der trennaktiven Schicht an der Membraninnenfläche. Grundsätzlich können die Porengrößen der trennaktiven Schichten auch im Wesentlichen gleich sein. Unter "im Wesentlichen gleich" soll insbesondere eine Abweichung der mittleren Porengrößen von maximal fünf Prozent, besonders vorteilhaft von maximal drei Prozent und ganz besonders vorteilhaft von maximal einem Prozent verstanden werden.

Ein einziges Koaguliermittel wird verwendet. Dadurch können Herstellkosten der Mehrkanalmembran reduziert werden. Die Polymerlösung ist lediglich in ein einziges Koaguliermittel geführt.

Vorteilhafterweise weist das einzige Koaguliermittel lediglich ein Aggregatzustand auf. Das Koaguliermittel liegt vorzugsweise in flüssiger Form vor.

Die Polymerlösung ist direkt in das Koaguliermittel extrudiert. Dadurch kann eine besonders einfache Koagulation realisiert werden. Unter "direkt" soll insbesondere unmittelbar und insbesondere zumindest im Wesentlichen ohne einen Kontakt mit anderen Substanzen wie insbesondere Luft verstanden werden. Die Koagulierung erfolgt lediglich in dem einen einzigen Koaguliermittel. Vorteilhafterweise tritt die Membraninnenfläche mit dem Innenfluid in Kontakt, bevor das Koaguliermittel mit der Membranaußenfläche in Kontakt tritt. Vorteilhafterweise weist das Koaguliermittel, in das die Polymerlösung extrudiert wird, eine Temperatur zwischen 10 °C und 80°C und besonders vorteilhaft eine Temperatur zwischen 20°C und 70°C auf. Insbesondere ist es vorteilhaft, wenn das Innenfluid zumindest teilweise dem Koaguliermittel entspricht. Dadurch kann eine besonders einfache Herstellung der Mehrkanalmembran realisiert werden. Unter "zumindest teilweise" soll in diesem Zusammenhang insbesondere verstanden werden, dass das Innenfluid zumindest aus einem Bestandteil besteht das zumindest einem Bestandteil des Koaguliermittels entspricht. Ferner ist es vorteilhaft, wenn Wasser als Koaguliermittel verwendet wird. Dadurch können die Herstellkosten weiter reduziert werden.

Außerdem wird vorgeschlagen, dass eine Materialeigenschaft der Mehrkanalmembran durch Einsatz von Plasma verändert wird. Dadurch kann eine vorteilhafte Mehrkanalmembran hergestellt werden. Vorzugsweise wird die Materialeigenschaft mit ultraviolettem Licht (UV-Licht) verändert. Vorteilhafterweise wird das UV-Licht zur Hydrophilisierung der Mehrkanalmembran eingesetzt. Das Plasma ist vorzugsweise als Sauerstoffplasma ausgebildet. Vorteilhafterweise erfolgt die Hydrophilisierung im Plasma, insbesondere im Sauerstoffplasma. Die Veränderung der Materialeigenschaft der Mehrkanalmembran durch Einsatz von Plasma kann beispielsweise durch eine Vorrichtung, wie sie in der Druckschrift DE 102 36 717 beschrieben ist, erfolgen.

### Zeichnung

Weitere Vorteile ergeben sich aus der folgenden Zeichnungsbeschreibung. In den Zeichnungen sind drei Ausführungsbeispiele der Spinndüseneinheit, mittels der die Mehr-kanalmembran nach dem erfindungsgemäßen Verfahren hergestellt wird, dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Querschnitt einer Mehrkanalmembran,
- Fig. 2: teilweise einen Längsschnitt der Mehrkanalmembran,
- Fig. 3: eine Draufsicht einer Spinndüseneinheit,
- Fig. 4: eine Seitenansicht der Spinndüseneinheit,
- Fig. 5: einen Längsschnitt der Spinndüseneinheit entlang Schnittlinien A-A,
- Fig. 6: eine mikroskopische Aufnahme eines Querschnitts der Mehrkanalmembran mit zwei trennaktiven Schichten,
- Fig. 7: eine mikroskopische Aufnahme eines Querschnitts einer Mehrkanalmembran mit einer trennaktiven Schicht,
- Fig. 8: einen Längsschnitt einer alternativ ausgebildeten Spinndüseneinheit entlang Schnittlinien A-A,
- Fig. 9: einen Querschnitt der alternativ ausgebildeten Spinndüseneinheit entlang Schnittlinien B-B,
- Fig. 10: einen Querschnitt von einem dritten Ausführungsbeispiel einer Spinndüseneinheit und
- Fig. 11: teilweise einen Längsschnitt des dritten Ausführungsbeispiels der Spinndüseneinheit entlang Schnittlinien C-C.

### Beschreibung der Ausführungsbeispiele

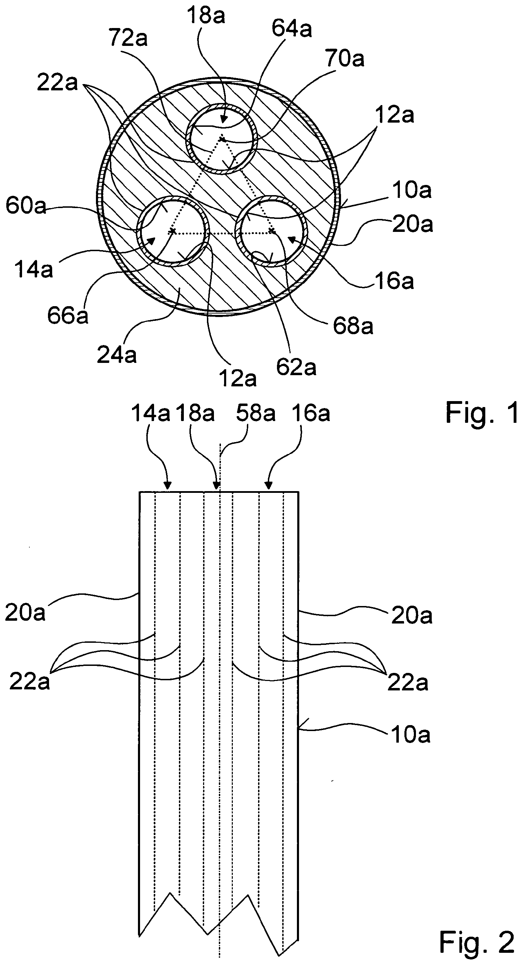

In den Figuren 1 bis 6 ist eine Mehrkanalmembran und eine, zur Herstellung der Mehrkanalmembran vorgesehene Spinndüseneinheit dargestellt. Die Mehrkanalmembran ist zylindrisch ausgebildet. In der Figur 1 ist die Mehrkanalmembran in einem Querschnitt dargestellt. Der Querschnitt verläuft senkrecht zu einer Längsachse 58a der zylindrischen Mehrkanalmembran. Die Mehrkanalmembran wird in einem Flüssigkeitsfilter, insbesondere in einem Wasserfilter eingesetzt. Die Mehrkanalmembran ist zur Flüssigkeitsaufbereitung, insbesondere zur Wasseraufbereitung vorgesehen. Die Mehrkanalmembran ist insbesondere für eine Cross-Flow-Filtration oder eine Dead-End-Filtration vorgesehen. Die Mehrkanalmembran ist als eine Filtrationsmehrkanalmembran ausgebildet.

Die Mehrkanalmembran weist eine zylindrische Membranaußenfläche 10a und eine Membraninnenfläche 12a auf. Die Membraninnenfläche 12a ist durch drei zylindrische Innenkanalflächen 60a, 62a, 64a ausgebildet. Die Innenkanalflächen 60a, 62a, 64a bilden jeweils einen längs verlaufenden Innenkanal 14a, 16a, 18a aus. Die Membraninnenfläche 12a bildet somit drei längs verlaufende Innenkanäle 14a, 16a, 18a aus. Die Membranaußenfläche 10a umgibt die Membraninnenfläche 12a und damit die längs verlaufenden Innenkanäle 14a, 16a, 18a. Die Innenkanäle 14a, 16a, 18a sind zum Transport einer filternden Flüssigkeit oder einer gefilterten Flüssigkeit vorgesehen, je nach dem in welche Richtung ein Permeat fließt bzw. in welche Richtung eine Permeation stattfindet.

Die drei Innenkanäle 14a, 16a, 18a sind voneinander getrennt. Die drei Innenkanäle 14a, 16a, 18a sind zylindrisch ausgebildet. Sie verlaufen von einem Ende bis zu einem anderen Ende der Mehrkanalmembran. Jeweils ein Innenkanal 14a, 16a, 18a bildet dabei ein Durchgangsloch. Jedes Durchgangsloch und damit jeder der drei Innenkanäle 14a, 16a, 18a weist eine zumindest im Wesentlichen kreisförmige Innenkanalöffnung auf. Die drei Innenkanäle 14a, 16a, 18a sind symmetrisch zueinander angeordnet. Die Innenkanalöffnungen und damit die Innenkanäle 14a, 16a, 18a weisen jeweils einen Mittelpunkt 66a, 68a, 70a auf, die an drei Ecken eines gleichseitigen bzw. gleichwinkligen Dreiecks 72a angeordnet sind.

Die Membranaußenfläche 10a und die Membraninnenfläche 12a bilden jeweils eine trennaktive Schicht 20a, 22a aus. Die trennaktiven Schichten 20a, 22a sind jeweils als eine filtrationsaktive Schicht ausgebildet. Die Membranaußenfläche 10a bildet eine äußere trennaktive Schicht 20a der Mehrkanalmembran. Die Membraninnenfläche 12a also die drei Innenkanalflächen 60a, 62a, 64a bilden eine innere trennaktive Schicht 22a der Mehrkanalmembran. Die trennaktiven Schichten 20a, 22a wirken gleichzeitig, d.h. die zu filternde Flüssigkeit wird doppelt gefiltert.

Die trennaktiven Schichten 20a, 22a sind porös. Die trennaktive Schicht 20a an der Membranaußenfläche 10a und die trennaktive Schicht 22a an der Membraninnenfläche 12a weisen jeweils eine mittlere Porengröße auf. Die mittlere Porengröße der trennaktiven Schicht 20a unterscheidet sich von der mittleren Porengröße der trennaktiven Schicht 22a. Grundsätzlich können die Porengrößen der trennaktiven Schichten 20a, 22a auch gleich sein. Die trennaktive Schicht 20a an der Membranaußenfläche 10a und die trennaktive Schicht 22a an der Membraninnenfläche 12a sind auf einen Bedarf eingestellt. Die trennaktiven Schichten 20a, 22a sind unabhängig voneinander einstellbar bzw. steuerbar.

Zur Unterstützung der trennaktiven Schichten 20a, 22a und zur Stabilisierung weist die Mehrkanalmembran eine Stützschicht 24a auf. Die Stützschicht 24a der Mehrkanalmembran ist von der trennaktiven Schicht 20a an der Membranaußenfläche 10a umgeben. Die trennaktive Schicht 22a an der Membraninnenfläche 12a ist von der Stützschicht 24a der Mehrkanalmembran umgeben.

Die Stützschicht 24a weist eine, im Vergleich zu den trennaktiven Schichten 20a, 22a hohe Permeabilität auf. Die trennaktiven Schichten 20a, 22a sind im Vergleich zu der Stützschicht 24a sehr dünn und dicht. Die trennaktiven Schichten 20a, 22a und die Stützschicht 24a bestehen aus einem gleichen Polymer. Die Mehrkanalmembran ist somit als eine integralasymmetrische Mehrkanalmembran ausgeführt.

Die Stützschicht 24a ist porös. Die Stützschicht 24a weist eine mittlere Porengröße auf. Die mittlere Porengröße der Stützschicht 24a unterscheidet sich von der mittleren Porengröße der trennaktiven Schicht 20a und von der mittleren Porengröße der trennaktiven Schicht 22a. Die mittlere Porengröße der Stützschicht 24a ist größer als die mittlere Porengröße der trennaktiven Schicht 20a und als die mittlere Porengröße der trennaktiven Schicht 22a. Die mittlere Porengröße der Stützschicht 24a entlang des Querschnitts und entlang der Längsachse 58a ist im Wesentlichen konstant. Die Stützschicht 24a weist eine im Wesentlichen konstante Porosität auf. Die Porosität der Stützschicht 24a ist im Vergleich zu der mittleren Porengröße der trennaktiven Schicht 20a und zu der mittleren Porengröße der trennaktiven Schicht 22a groß. Die mittleren Porengrößen der trennaktiven Schichten 20a, 22a sind um etwa das zehnfache kleiner als die mittlere Porengröße der Stützschicht 24a.

In diesem Ausführungsbeispiel bestehen die trennaktiven Schichten 20a, 22a und die Stützschicht 24a und damit die Mehrkanalmembran aus einem Polymer mit einer erhöhten Hydrophilie, d.h. mit einer erhöhten Wasserbenetzbarkeit. Die Mehrkanalmembran besteht aus Polyethersolfon (PES). Als Lösungsmittel für das Polymer wird das Lösungsmittel N-Methyl-2-pyrrolidon (NMP) verwendet. Zur Polymerisation wird Polyvinylpirrolidon (PVP) verwendet. Eine Polymerlösung besteht somit aus Polyethersolfon, N-Methyl-2-pyrrolidon und Polyvinylpirrolidon. In diesem Ausführungsbeispiel setzt sich die Polymerlösung aus 30% Polyethersolfon, 50% N-Methyl-2-pyrrolidon, 10% Polyvinylpirrolidon, 5% Wasser und 5% Glycerin zusammen.

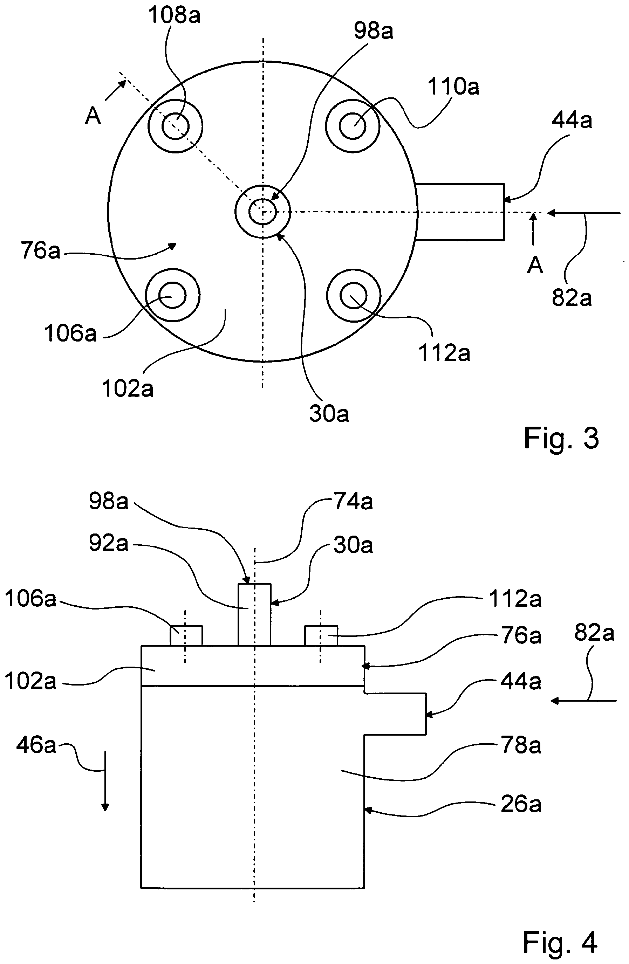

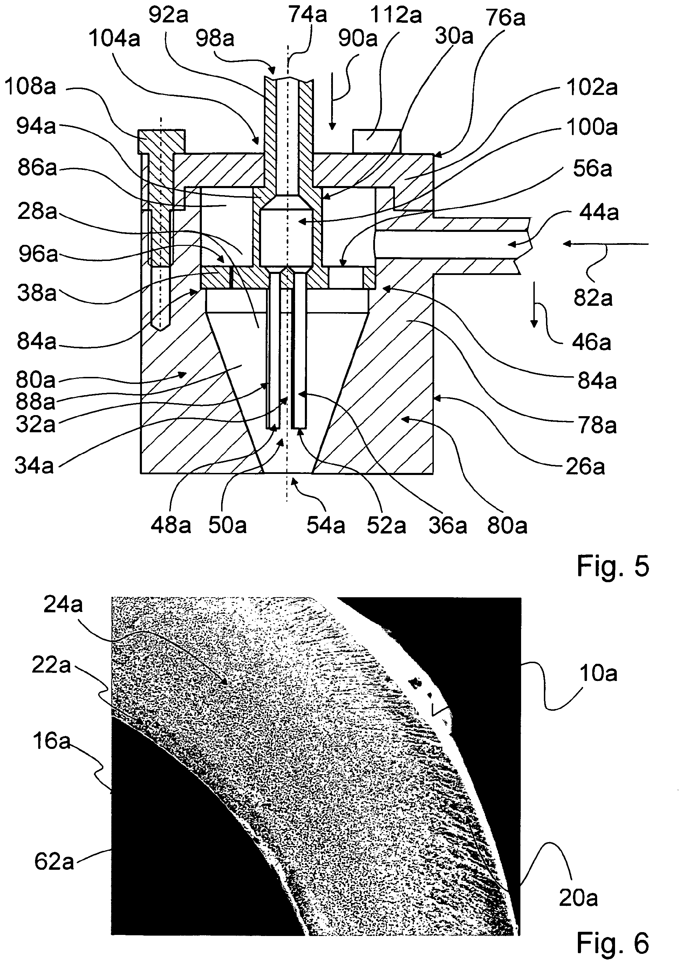

Die Mehrkanalmembran ist durch eine Spinndüseneinheit hergestellt (vgl. Fig. 3 bis 5). In der Figur 3 ist die Spinndüseneinheit in einer Draufsicht dargestellt. In der Figur 4 ist die Spinndüseneinheit in einer Seitenansicht dargestellt. In der Figur 5 ist die Spinndüseneinheit in einem Längsschnitt entlang einer Schnittlinie A-A gemäß Figur 3 dargestellt. Der Längsschnitt verläuft parallel zu einer Extrusionsrichtung 46a und damit zu einer Längsachse 74a der Spinndüseneinheit.

Die Spinndüseneinheit ist dreiteilig ausgebildet. Die Spinndüseneinheit weist eine Extrusionseinheit 26a, eine Innenfluideinbringeinheit 30a und eine Deckeleinheit 76a auf.

Die Spinndüseneinheit weist zur Führung der Polymerlösung die Extrusionseinheit 26a auf. Die Extrusionseinheit 26a umfasst ein einziges längs verlaufendes Extrusionselement 78a. Das Extrusionselement 78a bildet einen Extrusionsraum 28a aus, in dem die Polymerlösung geführt, also extrudiert wird. Die Polymerlösung wird in die Extrusionsrichtung 46a in dem Extrusionsraum 28a extrudiert. Das Extrusionselement 78a bildet einen längs verlaufenden Extrusionsraum 28a aus. Das Extrusionselement bildet einen teilweise trichterförmigen bzw. kegelförmigen Extrusionsraum 28a aus. Der Extrusionsraum 28a ist durch eine Wandung 80a des Extrusionselements 78a umgeben. Die Wandung 80a definiert somit den Extrusionsraum 28a. In diesem Ausführungsbeispiel ist die Extrusionseinheit 26a einstückig ausgebildet. Grundsätzlich kann die Extrusionseinheit 26a auch mehrstückig ausgebildet sein, wobei die mehrstückige Extrusionseinheit insbesondere durch ein thermisches Verfahren zum stoffschlüssigen Fügen, wie beispielsweise Löten oder Schweißen miteinander verbunden ist und ein Montagebauteil bilden, das in einem einzigen Montageschritt in der Spinndüseneinheit verbaut wird.

Zur Einbringung der Polymerlösung in den Extrusionsraum 28a weist das Extrusionselement 78a einen Polymerlösungszulauf 44a auf. Der Polymerlösungszulauf 44a verläuft durch die Wandung 80a senkrecht zur Extrusionsrichtung 46a und damit senkrecht zur Längsachse 74a. Eine Polymerlösungszulaufsrichtung 82a in dem Polymerlösungszulauf 44a ist senkrecht zur Extrusionsrichtung 46a bzw. senkrecht zur Längsachse 74a. Der Polymerlösungszulauf 44a zeigt von außen nach innen. Der Polymerlösungszulauf 44a ist als eine Bohrung in der Wandung 80a des Extrusionselements 78a, die strömungstechnisch mit dem Extrusionsraum 28averbunden ist, ausgebildet.

Zur Ausbringung der Polymerlösung aus dem Extrusionsraum 28a, also aus der Spinndüseneinheit weist die Extrusionseinheit 26a und damit das Extrusionselement 78a eine Polymerlösungsaustrittsöffnung 54a auf. Die Polymerlösungsaustrittsöffnung 54a zeigt in Extrusionsrichtung 46a. Die Polymerlösungsaustrittsöffnung 54a ist in Extrusionsrichtung 46a nach dem Polymerlösungszulauf 44a angeordnet. Die Polymerlösung verlässt die Spinndüseneinheit aus der Polymerlösungsaustrittsöffnung 54a. Ein Mittelpunkt des Extrusionselements 78a entspricht einem Mittelpunkt der Polymerlösungsaustrittsöffnung 54a. Die Polymerlösungsaustrittsöffnung 54a zeigt von oben nach unten. Die Polymerlösungsaustrittsöffnung 54a weist einen Durchmesser auf, der größer ist als ein Durchmesser des Polymerlösungszulaufs44a. Der Durchmesser der Polymerlösungsaustrittsöffnung 54a beträgt in diesem Ausführungsbeispiel 4 Millimeter.

Zur Abstützung und Anordnung der Innenfluideinbringeinheit 30a weist das Extrusionselement 78a ein Abstützelement 84a auf. Das Abstützelement 84a ist innerhalb des Extrusionsraums 28a angeordnet. Das Abstützelement 84a ist entlang eines Umfangs des Extrusionselements 78a innerhalb der Wandung 80a angeordnet. Das Abstützelement 84a ist in Extrusionsrichtung 46a und damit in Polymerlösungszulaufsrichtung 82a nach dem Polymerlösungszulauf 44a angeordnet. Das Abstützelement 84a ist bezüglich einer Richtung, die ausgehend von der Deckeleinheit 76a zur Polymerlösungsaustrittsöffnung 54a zeigt, unterhalb des Polymerlösungszulaufs 44a angeordnet. Das Abstützelement 84a ist aus dem gleichen Material wie das Extrusionselement 78a. Das Abstützelement 84a ist einstückig mit dem Extrusionselement 78a ausgebildet. Das Abstützelement 84a ist ein Teil der Wandung 80a des Extrusionselements 78a. Das Abstützelement 84a ist als eine Verjüngung des Extrusionsraums 28a und somit als das Material des Extrusionselements 78a innerhalb des Extrusionsraums 28a ausgebildet.

Das Abstützelement 84a definiert eine Ebene, die senkrecht zu der Extrusionsrichtung 46a und damit senkrecht zu der Längsachse 74a angeordnet ist. Diese Ebene, also das Abstützelement 84a unterteilt den Extrusionsraum 28a in einen Polymerlösungszulaufsraum 86a und in einen Polymerlösungsablaufsraum 88a. Der Polymerlösungszulaufsraum 86a ist strömungstechnisch direkt mit dem Polymerlösungszulauf 44a des Extrusionselement 78a verbunden. Der Polymerlösungsablaufsraum 88a ist strömungstechnisch direkt mit der Polymerlösungsaustrittsöffnung 54a des Extrusionselements 78a verbunden. In einem Extrusionsvorgang läuft die Polymerlösung aus dem Polymerlösungszulauf 44a zuerst in den Polymerlösungszulaufsraum 86a und anschließend in den Polymerlösungsablaufsraum 88a.

Der Polymerlösungszulaufsraum 86a ist zylinderförmig ausgebildet. Der Polymerlösungsablaufsraum 88a des Extrusionsraums 28a ist teilweise trichterförmig ausgebildet. Der Polymerlösungszulaufsraum 86a und der Polymerlösungsablaufraum 88a weisen unterschiedliche Durchmesser auf. Der Durchmesser des Polymerlösungszulaufsraums 86a ist größer als der Durchmesser des Polymerlösungsablaufraums 88a. Der Durchmesser des Polymerlösungsablaufraums 88a verkleinert sich dabei in Extrusionsrichtung 46a nach einer bestimmten Strecke kontinuierlich bis zu dem Durchmesser der Polymerlösungsaustrittsöffnung 54a.

Die Spinndüseneinheit weist zur Führung eines Innenfluids und damit zur Bildung der drei Innenkanäle 14a, 16a, 18a der Mehrkanalmembran bzw. zur Bildung der trennaktiven Schicht 22a an der Membraninnenfläche 12a, die Innenfluideinbringeinheit 30a auf. Dazu weist die Innenfluideinbringeinheit 30a drei längs verlaufende Kanäle 32a, 34a, 36a auf. Die Kanäle 32a, 34a, 36a trennen in der Spinndüseneinheit strömungstechnisch die Polymerlösung von dem Innenfluid. Die drei Kanäle 32a, 34a, 36a sind in der Spinndüseneinheit innerhalb des Extrusionsraums 28a angeordnet.

Die Kanäle 32a, 34a, 36a weisen im Querschnitt jeweils eine Durchgangsöffnung auf, durch die das Innenfluid geführt wird. Die jeweiligen Durchgangsöffnungen weisen jeweils einen Durchmesser auf, der entlang des jeweiligen Kanals 32a, 34a, 36a konstant ist. Die Kanäle 32a, 34a, 36a weisen jeweils den gleichen Durchmesser auf. Die Innenfluideinbringeinheit 30a, insbesondere die Kanäle 32a, 34a, 36a definieren einen Innenraum der Spinndüseneinheit, durch den ein Innenfluid geführt wird. Eine Innenfluidströmungsrichtung 90a entspricht der Extrusionsrichtung 46a. Die Innenfluidströmungsrichtung 90a verläuft parallel zu der Längsachse 74a.

Die drei Kanäle 32a, 34a, 36a sind symmetrisch zueinander angeordnet. Die Durchgangsöffnungen und damit die Kanäle 32a, 34a, 36a weisen jeweils einen Mittelpunkt auf. Die Mittelpunkte der Durchgangsöffnungen und damit die Mittelpunkte der Kanäle 32a, 34a, 36a sind an drei Ecken eines gleichseitigen bzw. gleichwinkligen Dreiecks angeordnet. Die Mittelpunkte der Kanäle 32a, 34a, 36a entsprechen im Wesentlichen den Mittelpunkten 66a, 68a, 70a der Innenkanäle 14a, 16a, 18a der Mehrkanalmembran. Der Durchmesser der Durchgangsöffnung des jeweiligen Kanals 32a, 34a, 36a beträgt jeweils 1,1 Millimeter.

Die Innenfluideinbringeinheit 30a weist weiter ein Zulaufelement 92a, ein Übergangselement 94a und ein Stützelement 38a auf. Das Zulaufelement 92a, das Übergangselement 94a und das Stützelement 38a sind in der Innenfluidströmungsrichtung 90a nacheinander angeordnet. Das Übergangselement 94a ist in der Innenfluidströmungsrichtung 90a nach dem Zulaufelement 92a und vor dem Stützelement 38a angeordnet. Das Übergangselement 94a ist zwischen dem Zulaufelement 92a und dem Stützelement 38a angeordnet. Das Innenfluid durchströmt somit zuerst das Zulaufelement 92a, dann das Übergangselement 94a und dann das Stützelement 38a und die Kanäle 32a, 34a, 36a. Das Zulaufelement 92a, das Übergangselement 94a und das Stützelement 38a sind koaxial zueinander angeordnet. Das Übergangselement 94a verbindet das Zulaufelement 92a und das Stützelement 38a miteinander.

Die Wandung 80a des Extrusionselements 78a umgibt teilweise die Innenfluideinbringeinheit 30a. Die Wandung 80a des Extrusionselements 78a umgibt das Übergangselement 94a, das Stützelement 38a und die drei Kanäle 32a, 34a, 36a. Das Übergangselement 94a, das Stützelement 38a und die drei Kanäle 32a, 34a, 36a sind innerhalb des Extrusionsraums 28a und damit innerhalb des Extrusionselements 78a angeordnet. Das Stützelement 38a und das Übergangselement 94a sind innerhalb des Polymerlösungszulaufsraums 86a angeordnet. Die drei Kanäle 32a, 34a, 36a sind teilweise in dem Polymerlösungszulaufsraum 86a und teilweise in dem Polymerlösungsablaufsraum 88a angeordnet. Dabei sind die Kanäle 32a, 34a, 36a mit mehr als 50 Prozent ihrer axialen Erstreckung innerhalb des trichterförmigen Polymerlösungsablaufraums 88a und mit mehr als 70 Prozent ihrer axialen Erstreckung innerhalb des Polymerlösungsablaufsraums 88a angeordnet. Die Kanäle 32a, 34a, 36a weisen alle die gleiche axiale Erstreckung auf. Die Innenfluideinbringeinheit 30a und die Extrusionseinheit 26a sind koaxial zueinander angeordnet.

Das Zulaufelement 92a, das Übergangselement 94a und das Stützelement 38a weisen jeweils unterschiedliche Durchmesser auf. Die Kanäle 32a, 34a, 36a weisen jeweils gleiche Durchmesser auf, wobei die Durchmesser der Kanäle 32a, 34a, 36a sich von den Durchmessern des Zulaufelements 92a, des Übergangselements 94a und des Stützelements 38a unterscheiden. Der Durchmesser des Zulaufelements 92a ist dabei im Vergleich zu dem Durchmesser des Übergangselements 94a und dem Durchmesser des Stützelements 38a am kleinsten ausgebildet. Der Durchmesser des Stützelements 38a ist dabei im Vergleich zu dem Durchmesser des Zulaufelements 92a, dem Durchmesser des Übergangselements 94a und den Durchmessern der Kanäle 32a, 34a, 36a am größten ausgebildet. Der Durchmesser der Kanäle 32a, 34a, 36a ist im Vergleich zu dem Durchmesser des Zulaufelements 92a, dem Durchmesser des Übergangselements 94a und dem Durchmesser des Stützelements 38a am kleinsten ausgebildet. Der Durchmesser der einzelnen Kanäle 32a, 34a, 36a beträgt 1,2 Millimeter. Somit weist jeder einzelne Kanal 32a, 34a, 36a eine Wandstärke von 0,1 Millimeter auf.

Der Durchmesser des Stützelements 38a ist größer als der Durchmesser des Polymerlösungsablaufraums 88a und kleiner als der Durchmesser des Polymerlösungszulaufraums 86a. In diesem Ausführungsbeispiel ist der Durchmesser des Stützelements 38a minimal kleiner als der Durchmesser des Polymerlösungszulaufraums 86a. Das Stützelement 38a weist den Durchmesser auf, durch den das Stützelement 38a genau an einem Umfang des Polymerlösungszulaufraums 86a bzw. an dem Material des Extrusionselements 78a in dem Polymerlösungszulaufraums 86a anliegt. Das Stützelement 38a liegt an dem Abstützelement 84a an. Das Stützelement 38a stützt sich in Extrusionsrichtung 46a an dem Abstützelement 84a und damit an dem Extrusionselement 78a innerhalb des Extrusionsraums 28a ab. Die Innenfluideinbringeinheit 30a bildet durch das Stützelement 38a einen in Extrusionsrichtung 46a wirkenden Formschluss mit dem Extrusionselement 78a. Das Stützelement 38a bildet den Formschluss in Extrusionsrichtung 46a mit dem Extrusionselement 78a innerhalb des Extrusionsraums 28a. Das Stützelement 38a nimmt in dem Extrusionsvorgang eine, durch die in dem Extrusionsraum 28a strömende Polymerlösung erzeugte Kraft auf und leitet diese Kraft auf das Extrusionselement 78a weiter. Dadurch fixiert das Stützelement 38a die Innenfluideinbringeinheit 30a, insbesondere die Kanäle 32a, 34a, 36a innerhalb des Extrusionsraums 28a.

Durch die Abstützung des Stützelements 38a an dem Abstützelement 84a ist das Stützelement 38a innerhalb des Extrusionsraums 28a angeordnet. Das Stützelement 38a ist innerhalb des Polymerlösungszulaufsraums 86a angeordnet. Das Stützelement 38a ist in Extrusionsrichtung 46a und damit in Polymerlösungszulaufsrichtung 82a nach dem Polymerlösungszulauf 44a angeordnet. Das Stützelement 38a ist bezüglich der Richtung, die ausgehend von der Deckeleinheit 76a zur Polymerlösungsaustrittsöffnung 54a zeigt, unterhalb des Polymerlösungszulaufs 44a angeordnet. Das Stützelement 38a ist in Extrusionsrichtung 46a vor der Polymerlösungsaustrittsöffnung 54a angeordnet. Das Stützelement 38a ist aus einem gleichen Material wie die Innenfluideinheit 30a. Das Stützelement 38a ist einstückig mit der Innenfluideinheit 30a ausgebildet. Das Stützelement 38a ist ein Teil einer Wandung der Innenfluideinheit 30a.

Zur strömungstechnischen Verbindung des Polymerlösungszulaufraums 86a und des Polymerlösungsablaufraums 88a und damit zur strömungstechnischen Verbindung des Polymerlösungszulaufs 44a und der Polymerlösungsaustrittsöffnung 54a weist das Stützelement 38a eine Durchgangsöffnung 56a auf. Die Durchgangsöffnung 56a ist in einem Querschnitt, der durch das Stützelement 38a verläuft, vollständig von dem Material des Stützelements 38a umgeben. Die Durchgangsöffnung 56a ist am Polymerlösungszulauf 44a angeordnet. Die Durchgangsöffnung 56a durchdringt das Stützelement 38a parallel zu der Längsachse 74a.

Die Durchgangsöffnung 56a weist einen Durchmesser auf. Der Durchmesser der Durchgangsöffnung 56a entspricht ungefähr dem Durchmesser des Polymerlösungszulaufs 44a. Der Durchmesser der Durchgangsöffnung 56a ist kleiner als der Durchmesser der Polymerlösungsaustrittsöffnung 54a. Die Durchgangsöffnung 56a ist als eine Bohrung in dem Stützelement 38a ausgebildet. Der Durchmesser der Durchgangsöffnung 56a beträgt 3 Millimeter.

Zur Verbesserung eines Strömungsverhaltens der Polymerlösung in dem Extrusionsraum 28a weist das Stützelement 38a eine Entlüftungsöffnung 96a auf. Die Entlüftungsöffnung 96a weist einen Durchmesser auf, der kleiner ist, als der Durchmesser der Durchgangsöffnung 56a. Die Entlüftungsöffnung 96a ist als eine Bohrung in dem Stützelement 38a ausgebildet.

Zur Einbringung des Innenfluids in die Innenfluideinbringeinheit 30a weist die Innenfluideinbringeinheit 30a einen Innenfluidzulauf 98a auf. Der Innenfluidzulauf 98a verläuft entlang der Längsachse 74a der Innenfluideinbringeinheit 30a durch das Zulaufelement 92a. Der Innenfluidzulauf 98a verläuft entlang einer Längsachse des Zulaufelements 92a, die der Längsachse 74a entspricht. Das Zulaufelement 92a weist somit den Innenfluidzulauf 98a auf. Der Innenfluidzulauf 98a zeigt von oben nach unten. Der Innenfluidzulauf 98a ist als eine Bohrung in dem Zulaufelement 92a ausgebildet.

Zur strömungstechnischen Verbindung der Kanäle 32a, 34a, 36a und des Innenfluidzulaufs 98a, weist die Innenfluideinbringeinheit 30a einen Übergangsraum 100a auf. Der Übergangsraum 100a verläuft entlang der Längsachse 74a der Innenfluideinbringeinheit 30a durch das Übergangselement 94a. Der Übergangsraum 100a verläuft entlang einer Längsachse des Übergangselements 94a, die der Längsachse 74a entspricht. Das Übergangselement 94a weist somit den Übergangsraum 100a auf. Der Übergangsraum 100a und der Innenfluidzulauf 94a sind koaxial zueinander angeordnet. Die drei Kanäle 32a, 34a, 36a, und damit die drei Durchgangsöffnungen der Kanäle 32a, 34a, 36a sind in einem Querschnitt, der durch das Übergangselement 94a verläuft und der senkrecht zur Extrusionsrichtung 46a und damit senkrecht zur Längsachse 74a ausgerichtet ist, alle innerhalb des Übergangsraums 100a angeordnet. Jeder Kanal 32a, 34a, 36a ist strömungstechnisch mit dem Übergangsraum 100a verbunden.

Zur strömungstechnischen Verbindung des Übergangsraums 100a und des Extrusionsraums 28a verlaufen die Kanäle 32a, 34a, 36a entlang der Längsachse 74a und damit senkrecht durch das Stützelement 38a. Das Stützelement 38a positioniert somit die Kanäle 32a, 34a, 36a zueinander. Die Kanäle 32a, 34a, 36a durchdringen das Stützelement 38a entlang der Längsachse 74a vollständig und verbinden strömungstechnisch den Extrusionsraum 28a mit dem Übergangsraum 100a und damit mit dem Innenfluidzulauf 98a. Die Kanäle 32a, 34a, 36a verbinden strömungstechnisch den Übergangsraum 100a und damit den Zulauf 98a und den trichterförmigen Polymerlösungsablaufsraum 88a miteinander.

Zur Ausbringung des Innenfluids weist die Innenfluideinbringeinheit 30a drei Innenfluidaustrittsöffnungen 48a, 50a, 52a auf. Die Innenfluidaustrittsöffnungen 48a, 50a, 52a sind jeweils durch ein Kanalende der Kanäle 32a, 34a, 36a ausgebildet. Der Kanal 32a weist die Innenfluidaustrittsöffnung 48a, der Kanal 34a die Innenfluidaustrittsöffnung 50a und der Kanal 36a die Innenfluidaustrittsöffnung 52a auf. Die Innenfluidaustrittsöffnungen 48a, 50a, 52a und damit die drei Kanalenden der Kanäle 32a, 34a, 36a sind strömungstechnisch mit dem Innenfluidzulauf 98a verbunden. Die Innenfluidaustrittsöffnungen 48a, 50a, 52a weisen jeweils einen Mittelpunkt auf, der jeweils dem entsprechenden Mittelpunkt der zugehörigen Durchgangsöffnung des Kanals 32a, 34a, 36a entspricht.

Die Innenfluidaustrittsöffnungen 48a, 50a, 52a sind alle innerhalb des Extrusionsraums 28a angeordnet bzw. positioniert. Die Innenfluidaustrittsöffnungen 48a, 50a, 52a sind alle innerhalb des trichterförmigen Polymerlösungsablaufraums 88a angeordnet. Die Innenfluidaustrittsöffnungen 48a, 50a, 52a sind alle in Extrusionsrichtung 46a vor der Polymerlösungsaustrittsöffnung 54a angeordnet. Eine Führung des Innenfluids endet somit beanstandet zu einer Führung der Polymerlösung. Die Innenfluidaustrittsöffnungen 48a, 50a, 52a sind alle in einer Ebene angeordnet. Die Ebene, in der die Innenfluidaustrittsöffnungen 48a, 50a, 52a angeordnet sind, verläuft senkrecht zur Extrusionsrichtung 46a und senkrecht zur Innenfluidströmungsrichtung 90a.

Der Innenfluidzulauf 98a, der Übergangsraum 100a und die Innenfluidaustrittsöffnungen 48a, 50a, 52a weisen jeweils unterschiedliche Durchmesser auf. Der Durchmesser des Übergangsraums 100a ist dabei im Vergleich zu dem Durchmesser des Innenfluidzulaufs 98a und dem Durchmesser der einzelnen Innenfluidaustrittsöffnungen 48a, 50a, 52a am größten ausgebildet. Der Durchmesser der einzelnen Innenfluidaustrittsöffnungen 48a, 50a, 52a ist dabei im Vergleich zu dem Durchmesser des Innenfluidzulaufs 98a und dem Durchmesser des Übergangsraums 100a am kleinsten ausgebildet. Der Durchmesser der einzelnen Innenfluidaustrittsöffnungen 48a, 50a, 52a entspricht dem Durchmesser der jeweiligen Durchgangsöffnung der einzelnen Kanäle 32a, 34a, 36a.

Das Zulaufelement 92a, das Übergangselement 94a, das Stützelement 38a und die Kanäle 32a, 34a, 36a sind einstückig ausgebildet. Somit ist die Innenfluideinbringeinheit 30a einstückig ausgebildet. Grundsätzlich ist es auch denkbar, dass das Zulaufelement 92a, das Übergangselement 94a, das Stützelement 38a und die Kanäle 32a, 34a, 36a als separate Elemente ausgebildet sind, die dann insbesondere durch ein thermisches Verfahren zum stoffschlüssigen Fügen, wie beispielsweise Löten oder Schweißen miteinander verbunden werden. Dadurch bildet die Innenfluideinbringeinheit 30a ein Montagebauteil, das in einem einzigen Montageschritt in die Spinndüseneinheit verbaut wird.

Zur Abdichtung des Extrusionsraums 28a weist die Spinndüseneinheit die Deckeleinheit 76a auf. Die Deckeleinheit 76a umfasst ein Spinndüsendeckel 102a. Der Spinndüsendeckel 102a weist eine Durchgriffsöffnung 104a auf. Die Durchgriffsöffnung 104a weist einen Durchmesser auf. Der Durchmesser der Durchgriffsöffnung 104a des Spinndüsendeckels 102a ist größer als der Durchmesser des Zulaufelements 92a der Innenfluideinbringeinheit 30a und kleiner als der Durchmesser des Übergangselements 94a der Innenfluideinbringeinheit 30a. Der Durchmesser der Durchgriffsöffnung 104a ist minimal größer als der Durchmesser des Zulaufelements 92a. Das Zulaufelement 92a durchdringt den Spinndüsendeckel 102a durch die Durchgriffsöffnung 104a. Die Durchgriffsöffnung 104a weist den Durchmesser auf, bei dem ein Umfang der Durchgriffsöffnung 104a genau an einem Umfang des Zulaufelements 92a liegt. Die Durchgriffsöffnung 104a weist somit den Durchmesser auf, bei dem ein Material des Spinndüsendeckels 102a genau an einem Material des durchgreifenden Zulaufelements 92a und an einem Material des unterhalb der Spinndüsendeckels 102a angeordneten Übergangselements 94a anliegt. Der Spinndüsendeckel 102a und die Innenfluideinbringeinheit 30a bilden gegen die Extrusionsrichtung 46a einen Formschluss. Dieser Formschluss ist durch das Anliegen des Spinndüsendeckels 102a auf dem Übergangselement 94a realisiert. Die Durchgriffsöffnung 104a ist als eine Bohrung in dem Spinndüsendeckel 102a ausgebildet.

Zur Bereitstellung eines Formschlusses der Innenfluideinbringeinheit 30a und der Extrusionseinheit 26a gegen die Extrusionsrichtung 46a und damit zur Verbindung bzw. Befestigung der Innenfluideinbringeinheit 30a in der Extrusionseinheit 26a weist die Deckeleinheit 76a vier Formschlusselemente 106a, 108a, 110a, 112a auf. Der Spinndüsendeckel 102a ist mit den vier Formschlusselementen 106a, 108a, 110a, 112a formschlüssig mit dem Extrusionselement 78a verbunden. Die vier Formschlusselemente 106a, 108a, 110a, 112a sind als Schrauben ausgebildet.

Grundsätzlich kann das Extrusionselement 78a und/oder die Innenfluideinbringeinheit 30a aus einem Vollmaterial hergestellt werden. Dabei werden aus dem Vollmaterial mit geeigneten Fräswerkzeugen der Extrusionsraum 28a bzw. der Innenraum der Spinndüseneinheit entfernt. Dabei ist die Extrusionseinheit 26a und/oder die Innenfluideinbringeinheit 30a als ein nicht entferntes Material des Vollmaterials ausgebildet.

Zur Temperierung der Extrusionseinheit 26a, der Innenfluideinbringeinheit 30a und der Deckeleinheit 76a weist die Spinndüseneinheit ein nicht näher dargestelltes Heizelement auf. Das Heizelement erwärmt die Extrusionseinheit 26a, die Innenfluideinbringeinheit 30a und/oder die Deckeleinheit 76a auf eine bestimmte Temperatur.

Die Mehrkanalmembran wird durch die oben beschriebene Spinndüseneinheit hergestellt. Zur Ausbildung der Membranaußenfläche 10a der Mehrkanalmembran wird in dem Extrusionsvorgang die Polymerlösung mit einer definierten Extrusionsgeschwindigkeit durch die Extrusionseinheit 26a bzw. durch den Extrusionsraum 28a in die Extrusionsrichtung 46a extrudiert. Die Polymerlösung wird durch den Extrusionsraum 28a des Extrusionselements 78a in die Extrusionsrichtung 46a gepresst. Zur Ausbildung der Membraninnenfläche 12a wird die Polymerlösung zwischen den drei Kanälen 32a, 34a, 36a extrudiert, wodurch sich die drei Innenkanalflächen 60a, 62a, 64a bzw. die drei Innenkanäle 14a, 16a, 18a der Mehrkanalmembran bilden.

Zur Koagulierung wird ein einziges Koaguliermittel verwendet. Das Koaguliermittel ist als Wasser ausgebildet. In diesem Ausführungsbeispiel besteht das Innenfluid aus einem einzigen Bestandteil. Das Innenfluid entspricht dem Koaguliermittel. Das Innenfluid und das Koaguliermittel bestehen somit beide aus Wasser. Das Lösungsmittel wird damit mit Wasser aus dem Polymer entfernt. Die Extrusionsgeschwindigkeit beträgt 3 Meter pro Minute.

Die Polymerlösungsaustrittsöffnung 54a des Extrusionselements 78a und die Innenfluidaustrittsöffnungen 48a, 50a, 52a der Innenkanaleinheit 30a sind in dem Koaguliermittel bzw. in einem Koaguliermittelbad angeordnet. Die Polymerlösungsaustrittsöffnung 54a und die Innenfluidaustrittsöffnungen 48a, 50a, 52a sind in dem Extrusionsvorgang in dem Koaguliermittel angeordnet. Die Spinndüseneinheit ist in dem Extrusionsvorgang teilweise in dem Koaguliermittel angeordnet. Die Polymerlösung wird direkt in das Koaguliermittel, d.h. in das Koaguliermittelbad extrudiert. Das Polymer koaguliert in dem einzigen Koaguliermittel, wodurch sich die trennaktive Schicht 20a an der Membranaußenfläche 10a bildet.

In dem Extrusionsvorgang wird durch die drei Kanäle 32a, 34a, 36a und damit durch den Innenraum der Spinndüseneinheit gleichzeitig das Innenfluid geführt. Das Innenfluid und die Polymerlösung sind dabei durch die drei Kanäle 32a, 34a, 36a strömungstechnisch voneinander getrennt. Die strömungstechnische Trennung der Polymerlösung und des Innenfluids endet an den Innenfluidaustrittsöffnungen 48a, 50a, 52a. Die strömungstechnische Trennung der Polymerlösung und des Innenfluids endet in dem Extrusionsraum 28a bzw. in dem trichterförmigen Polymerlösungsablaufsraum 88a. Dadurch kommt die Membraninnenfläche 12a mit dem Innenfluid in Kontakt, wodurch sich die trennaktive Schicht 22a an der Membraninnenfläche 12a bildet.

Nach dem Koagulieren, also nach dem Verfestigen des gelösten Polymers entsteht die Mehrkanalmembran mit den zwei trennaktiven Schichten 20a, 22a und der Stützschicht 24a. Dabei bilden die Membranaußenfläche 10a und die Membraninnenfläche 12a jeweils eine trennaktive Schicht 20a, 22a. Das Innenfluid wird in einem intensiven Waschvorgang aus den Innenkanälen 14a, 16a, 18a ausgewaschen. Die trennaktiven Schichten 20a, 22a sind jeweils als die filtrationsaktive Schicht ausgebildet.

Zur Beeinflussung einer Bildung der trennaktiven Schichten 20a, 22a und der Stützschicht 24a wird die Spinndüseneinheit und das Koaguliermittel temperiert. Die Temperatur der Extrusionseinheit 26a, der Innenkanaleinheit 30a und der Deckeleinheit 76a werden durch das Heizelement der Spinndüseneinheit und eine Temperatur des Koaguliermittels durch ein weiteres nicht näher dargestelltes Heizelement eingestellt. Die Temperatur des Koaguliermittels beträgt 75°C.

In einem Nachbehandlungsvorgang wird die Mehrkanalmembran nach dem intensiven Waschvorgang für 24 Stunden in laufendem Wasser konditioniert bzw. präpariert. Nach dem Konditionieren der Mehrkanalmembran in laufendem Wasser wird die Mehrkanalmembran weiter zuerst 12 Stunden in einer 0,1 - 1%iger Natriumhypochloridlösung und danach 12 Stunden in einer 1- 10%iger Glycerinlösung konditioniert. Nach der Konditionierung wird die Mehrkanalmembran in laufendem Frischwasser von Chemikalien freigespült.

Ein mikroskopischer Ausschnitt einer erfindungsgemäßen Mehrkanalmembran, die durch die oben beschriebene Spinndüseneinheit und dem oben beschriebenen Verfahren hergestellt wurde ist in der Figur 6 in einem Querschnitt teilweise dargestellt. Die Mehrkanalmembran weist die trennaktive Schicht 20a an der Membranaußenfläche 10, eine trennaktive Schicht 22a an der Innenkanalfläche 58a bzw. an der Membraninnenfläche 12a und eine zwischen den trennaktiven Schichten 20a, 22a angeordnete Stützschicht 24a auf.

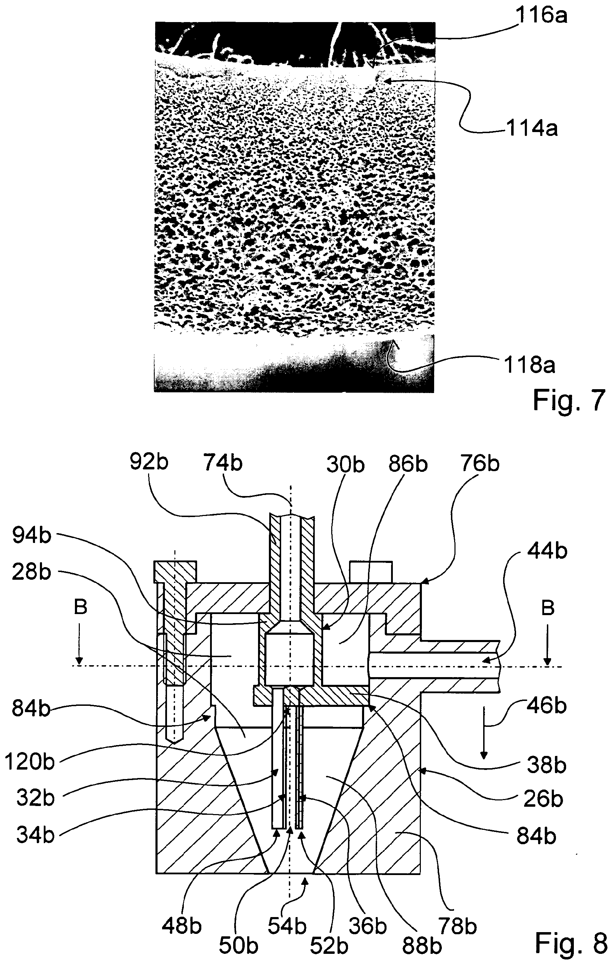

Zum Vergleich ist in der Figur 7 ein mikroskopischer Ausschnitt einer Mehrkanalmembran im Querschnitt dargestellt, die lediglich eine trennaktive Schicht 114a an einer Innenkanalfläche 116a aufweist. Eine Membranaußenfläche 118a weist keine trennaktive Schicht auf.

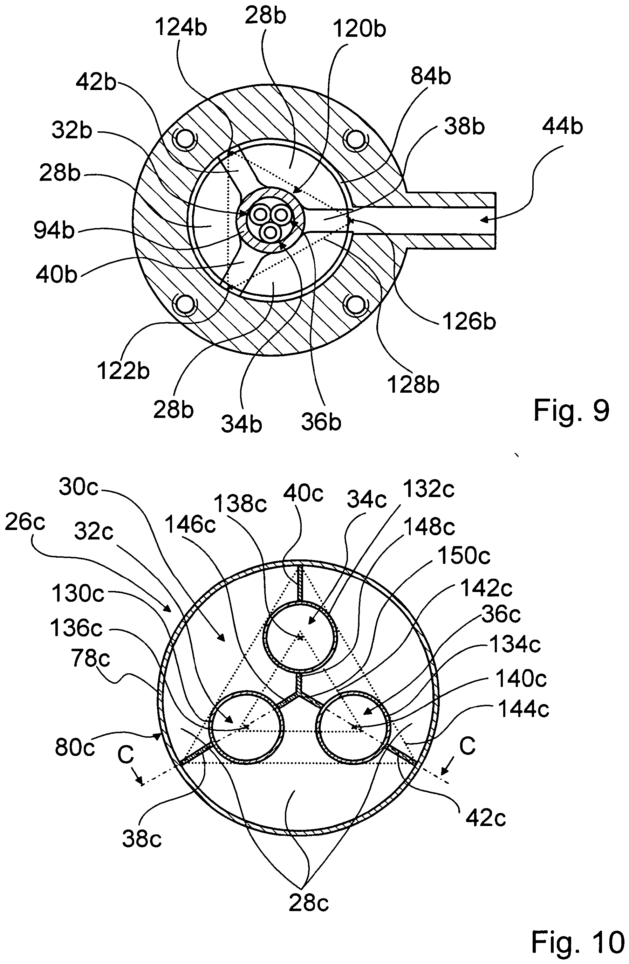

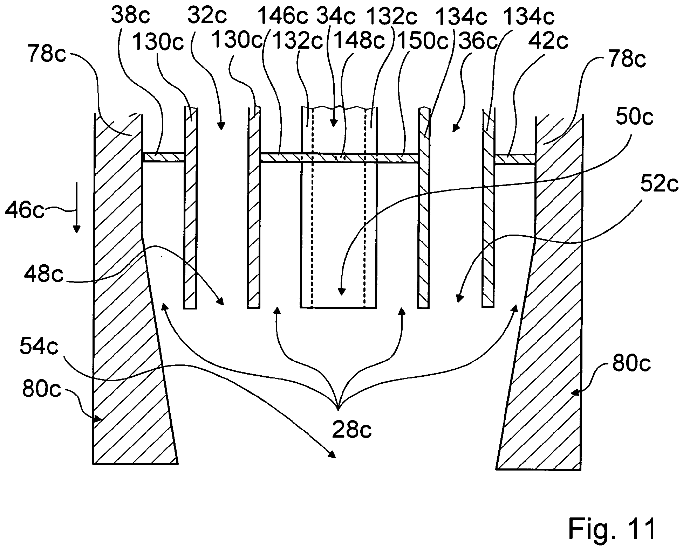

In den Figuren 8 bis 11 sind zwei weitere Ausführungsbeispiele der erfindungsgemäßen Spinndüseneinheit zur Herstellung der erfindungsgemäßen Mehrkanalmembran nach dem erfindungsgemäßen Verfahren gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung der anderen Ausführungsbeispiele, insbesondere der Figuren 1 bis 6, verwiesen werden kann. Zur Unterscheidung der Ausführungsbeispiele ist der Buchstabe a in den Bezugszeichen des Ausführungsbeispiels in den Figuren 1 bis 6 durch den Buchstaben b in den Bezugszeichen des Ausführungsbeispiels in den Figuren 8 und 9 und durch den Buchstaben c in den Bezugszeichen des Ausführungsbeispiels in den Figuren 10 und 11 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des anderen Ausführungsbeispiels, insbesondere der Figuren 1 bis 6, verwiesen werden.

In den Figuren 8 und 9 ist das zweite Ausführungsbeispiel einer Spinndüseneinheit zur Herstellung der oben beschriebenen Mehrkanalmembran nach dem oben beschriebenen Verfahren dargestellt. In der Figur 8 ist die Spinndüseneinheit in einem Längsschnitt (entlang den Schnittlinien A-A gemäß Figur 3) dargestellt. In der Figur 9 ist die Spinndüseneinheit in einem Querschnitt entlang den Schnittlinien B-B dargestellt.

Die Spinndüseneinheit weist eine Extrusionseinheit 26b mit einem Extrusionselement 78b auf, das zur Führung einer Polymerlösung einen Extrusionsraum 28b ausbildet. Der Extrusionsraum 28b ist teilweise trichterförmig ausgebildet. Der Extrusionsraum 28b ist in einen Polymerlösungszulaufsraum 86b und einen Polymerlösungsablaufsraum 88b unterteilt.

Weiter weist die Spinndüseneinheit eine Innenkanaleinheit 30b auf, die zur Führung eines Innenfluids drei innerhalb des Extrusionsraums 28b angeordnete Kanäle 32b, 34b, 36b aufweist, mit jeweils einer Innenfluidaustrittsöffnung 48b, 50b, 52b, die innerhalb des Extrusionsraums 28b angeordnet sind.

Die Innenkanaleinheit 30b weist ein Zulaufelement 92b, ein Übergangselement 94b und im Unterschied zum vorhergehenden Ausführungsbeispiel drei Stützelemente 38b, 40b, 42b auf. Die Stützelemente 38b, 40b, 42b sind alle innerhalb des Extrusionsraums 28b angeordnet. Die Stützelemente 38b, 40b, 42b liegen alle an einem Abstützelement 84b innerhalb des Extrusionsraums 28b an und stützen sich damit an dem Extrusionselement 78b ab. Die Stützelemente 38b, 40b, 42b sind in einer Extrusionsrichtung 46b nach einem Polymerlösungszulauf 44b und vor einer Polymerlösungsaustrittsöffnung 54b angeordnet.

Die Stützelemente 38b, 40b, 42b weisen einen gemeinsamen mittleren Bereich 120b auf. Die Stützelemente 38b, 40b, 42b sind durch den mittleren Bereich 120b miteinander verbunden. Der mittlere Bereich 120b ist in einem Querschnitt kreisförmig ausgebildet. Der mittlere Bereich 120b ist zylinderförmig. Der mittlere Bereich 120b weist einen Durchmesser auf, der einem Durchmesser des Übergangselements 94b entspricht. Der mittlere Bereich 120b weist einen Mittelpunkt auf, durch den eine Längsachse 74b verläuft. Die drei Kanäle 32b, 34b, 36b durchsetzen vollständig den mittleren Bereich 120b parallel zu der Längsachse 74b. Die drei Kanäle 32b, 34b, 36b durchsetzen die Stützelemente 38b, 40b, 42b in dem mittleren Bereich 120b. Die Stützelemente 38b, 40b, 42b positionieren mit dem mittleren Bereich 120b die Kanäle 32b, 34b, 36b zueinander.

Die Stützelemente 38b, 40b, 42b sind aus einem gleichen Material wie das Zulaufelement 92a und das Übergangselement 94a. Die Stützelemente 38b, 40b, 42b sind einstückig mit dem Zulaufelement 92a und dem Übergangselement 94a ausgebildet.

Das Stützelement 38b ist im Bereich des Polymerlösungszulaufs 44b angeordnet. Die Stützelemente 38b, 40b, 42b sind symmetrisch zueinander angeordnet. Die Stützelemente 38b, 40b, 42b sind gleichmäßig in dem Extrusionsraum 28b auf einer Ebene, die senkrecht zu der Extrusionsrichtung 46b und senkrecht zu der Längsachse 74b ausgerichtet ist, verteilt.

Die Stützelemente 38b, 40b, 42b sind an drei Ecken 122b, 124b, 126b eines gleichseitigen bzw. gleichwinkligen Dreiecks 128b angeordnet. Die drei Ecken 122b, 124b, 126b des durch die Anordnung der Stützelemente 38b, 40b, 42b definierten Dreiecks 128b liegen auf dem Abstützelement 84b des Extrusionselements 78b. Die drei Ecken 122b, 124b, 126b sind innerhalb des Extrusionselements 78b angeordnet. Die drei Kanäle 32b, 34b, 36b, das Zulaufelement 92b, das Übergangselement 94b und der mittlere Bereich 120b sind im Querschnitt innerhalb des, durch die Anordnung der drei Stützelemente 38b, 40b, 42b definierten gleichseitigen Dreiecks 128b angeordnet.

Die Stützelemente 38b, 40b, 42b sind im Unterschied zum vorhergehenden Ausführungsbeispiel jeweils stegförmig ausgebildet.

In den Figuren 10 und 11 ist das dritte Ausführungsbeispiel einer Spinndüseneinheit zur Herstellung der oben beschriebenen Mehrkanalmembran nach dem oben beschriebenen Verfahren dargestellt. In der Figur 9 ist die Spinndüseneinheit schematisch in einem Querschnitt dargestellt. In der Figur 9 ist die Spinndüseneinheit schematisch und teilweise in einem Längsschnitt entlang den Schnittlinien C-C dargestellt.

Die Spinndüseneinheit weist eine Extrusionseinheit 26c mit einem Extrusionselement 78c auf, das zur Führung einer Polymerlösung einen Extrusionsraum 28c ausbildet. Der Extrusionsraum 28c ist teilweise trichterförmig ausgebildet.

Weiter weist die Spinndüseneinheit eine Innenkanaleinheit 30c auf, das zur Führung eines Innenfluids drei innerhalb des Extrusionsraums 28c angeordnete Kanäle 32c, 34c, 36c aufweist, mit jeweils einer Innenfluidaustrittsöffnung 48c, 50c, 52c, die innerhalb des Extrusionsraums 28c angeordnet sind.

Der Kanal 32c ist durch eine Kanalwandung 130c definiert. Der Kanal 34c ist durch eine Kanalwandung 132c definiert. Der Kanal 36c ist durch eine Kanalwandung 134c definiert. Die Kanäle 32c, 34c, 36c weisen jeweils eine Durchgangsöffnung auf. Die Kanäle 32c, 34c, 36c und damit die Durchgangsöffnungen weisen jeweils einen Mittelpunkt 136c, 138c, 140c auf. Die drei Kanäle 32c, 34c, 36c sind symmetrisch zueinander angeordnet. Die Mittelpunkte 136c, 138c, 140c sind an drei Ecken eines gleichseitigen bzw. gleichwinkligen Dreiecks 142c angeordnet.

Die Innenkanaleinheit 30c weist drei Stützelemente 38c, 40c, 42c auf. Die Stützelemente 38c, 40c, 42c sind alle innerhalb des Extrusionsraums 28c angeordnet. Die Stützelemente 38c, 40c, 42c sind alle in Extrusionsrichtung 46c vor einer Polymerlösungsaustrittsöffnung 54c angeordnet. Im Unterschied zu den vorhergehenden Ausführungsbeispielen sind die Stützelemente 38c, 40c, 42c jeweils fest mit einer Wandung 80c des Extrusionselements 78c verbunden. Grundsätzlich kann das Extrusionselement 78c wie in den vorhergehenden Beispielen ein Abstützelement aufweisen, auf dem die Stützelemente 38c, 40c, 42c anliegen.

Das Stützelement 38c verbindet die Wandung 80c des Extrusionselements 78c mit der Kanalwandung 130c des Kanals 32c. Das Stützelement 40c verbindet die Wandung 80c des Extrusionselements 78c mit der Kanalwandung 132c des Kanals 34c. Das Stützelement 42c verbindet die Wandung 80c des Extrusionselements 78c mit der Kanalwandung 134c des Kanals 36c.

Die drei Stützelemente 38c, 40c, 42c sind symmetrisch zueinander angeordnet. Die Stützelemente 38c, 40c, 42c sind an drei Ecken eines gleichseitigen bzw. gleichwinkligen Dreiecks 144c angeordnet. Die drei Ecken des durch die Anordnung der Stützelemente 38c, 40c, 42c definierten Dreiecks 144c liegen auf der Wandung 80c des Extrusionselements 78c.

Die drei Kanäle 32c, 34c, 36c sind innerhalb des, durch die Anordnung der drei Stützelemente 38c, 40c, 42c definierten gleichseitigen Dreiecks 144c angeordnet. Das durch die Anordnung der Mittelspunkte 136c, 138c, 140c der Kanäle 32c, 34c, 36c definierte Dreieck 142c ist innerhalb des durch die Anordnung der drei Stützelemente 38c, 40c, 42c definierten Dreiecks 144c angeordnet, wobei Seiten der Dreiecke 142c, 144c parallel zueinander sind.

Zur Positionierung der drei Kanäle 32c, 34c, 36c zueinander und zur Stabilisierung der drei Kanäle 32c, 34c, 36c bzw. zur Verbindung der drei Kanäle 32c, 34c, 36c miteinander weist die Innenkanaleinheit 30c im Unterschied zu den vorherigen Ausführungsbeispielen drei Verbindungselemente 146c, 148c, 150c auf. Die drei Verbindungselemente 146c, 148c, 150c sind identisch ausgebildet. Das Verbindungselement 146c verbindet die Kanalwandung 130c des Kanals 32c mit der Kanalwandung 132c des Kanals 34c. Das Verbindungselement 148c verbindet die Kanalwandung 132c des Kanals 34c mit der Kanalwandung 134c des Kanals 36c. Das Verbindungselement 150c verbindet die Kanalwandung 134c des Kanals 36c mit der Kanalwandung 130c des Kanals 32c. Die drei Verbindungselemente 146c, 148c, 150c positionieren bzw. verbinden die drei Kanäle 32c, 34c, 36c in einem gleichen Abstand zueinander.

Die drei Verbindungselemente 146c, 148c, 150c sind einstückig ausgeführt. Die drei einstückig ausgebildeten Verbindungselemente 146c, 148c, 150c sind sternförmig ausgebildet. Grundsätzlich können die drei Verbindungselemente 146c, 148c, 150c auch separat zueinander ausgebildet sein und die Kanäle 32c, 34c, 36c separat zueinander verbinden bzw. positionieren.

Die Stützelemente 38c, 40c, 42c fixieren die drei Kanäle 32c, 34c, 36c in dem Extrusionsraum 28c. Die Stützelemente 38c, 40c, 42c und die Verbindungselemente 146c, 148c, 150c weisen jeweils eine, in die Extrusionsrichtung 46c weisende Erstreckung auf. Die in die Extrusionsrichtung 46c weisenden Erstreckungen der Stützelemente 38c, 40c, 42c und der Verbindungselemente 146c, 148c, 150c sind identisch. Die in die Extrusionsrichtung 46c weisenden Erstreckungen der Stützelemente 38c, 40c, 42c und der Verbindungselemente 146c, 148c, 150c sind wesentlich kleiner als axiale, also in die Extrusionsrichtung 46c weisende Erstreckungen der Kanäle 32c, 34c, 36c und damit des Extrusionselements 78c. Grundsätzlich können sich die in die Extrusionsrichtung 46c weisenden Erstreckungen der Stützelemente 38c, 40c, 42c und der Verbindungselemente 146c, 148c, 150c auch unterscheiden.

Das Extrusionselement 78c, die drei Kanäle 32c, 34c, 36c, die Stützelemente 38, 40, 42 und die Verbindungselemente 146c, 148c, 150c sind insbesondere durch ein thermisches Verfahren zum stoffschlüssigen Fügen, wie beispielsweise Löten oder Schweißen miteinander verbunden. Grundsätzlich können das Extrusionselement 78c, die drei Kanäle 32c, 34c, 36c, die Stützelemente 38c, 40c, 42c und die Verbindungselemente 146c, 148c, 150c aus einem Vollmaterial hergestellt werden. Dabei werden aus dem Vollmaterial mit geeigneten Fräswerkzeugen der Extrusionsraum 28c und ein Innenraum der Spinndüseneinheit entfernt. Dabei sind die Wandung 80c des Extrusionselements 78c, die drei Kanalwandungen 130c, 132c, 134c, die Stützelemente 38c, 40c, 42c und die Verbindungselemente 146c, 148c, 150c als ein nicht entferntes Material des Vollmaterials ausgebildet.

**Bezugszeichen**

| | | | |
|---|---|---|---|
| 10 | Membranaußenfläche | 54 | Polymerlösungsaus-trittsöffnung |
| 12 | Membraninnenfläche | | |
| 14 | Innenkanal | 56 | Durchgangsöffnung |
| 16 | Innenkanal | 58 | Längsachse |
| 18 | Innenkanal | 60 | Innenkanalfläche |
| 20 | trennaktive Schicht | 62 | Innenkanalfläche |
| 22 | trennaktive Schicht | 64 | Innenkanalfläche |
| 24 | Stützschicht | 66 | Mittelpunkt |
| 26 | Extrusionseinheit | 68 | Mittelpunkt |
| 28 | Extrusionsraum | 70 | Mittelpunkt |
| 30 | Innenfluideinbringeinheit | 72 | Dreieck |
| | | 74 | Längsachse |
| 32 | Kanal | 76 | Deckeleinheit |
| 34 | Kanal | 78 | Extrusionselement |
| 36 | Kanal | 80 | Wandung |
| 38 | Stützelement | 82 | Polymerlösungszulaufs-richtung |
| 40 | Stützelement | | |
| 42 | Stützelement | 84 | Abstützelement |
| 44 | Polymerlösungszulauf | 86 | Polymerlösungszulaufs-raum |
| 46 | Extrusionsrichtung | | |
| 48 | Innenfluidaustrittsöffnung | 88 | Polymerlösungsablaufsraum |
| 50 | Innenfluidaustrittsöffnung | 90 | Innenfluidströmungsrichtung |
| 52 | Innenfluidaustrittsöffnung | 92 | Zulaufelement |
| | | 94 | Übergangselement |
| 96 | Entlüftungsöffnung | 126 | Ecke |
| 98 | Innenfluidzulauf | 128 | Dreieck |
| 100 | Übergangsraum | 130 | Kanalwandung |
| 102 | Spinndüsendeckel | 132 | Kanalwandung |
| 104 | Durchgriffsöffnung | 134 | Kanalwandung |
| 106 | Formschlusselement | 136 | Mittelpunkt |
| 108 | Formschlusselement | 138 | Mittelpunkt |
| 110 | Formschlusselement | 140 | Mittelpunkt |
| 112 | Formschlusselement | 142 | Dreieck |
| 114 | trennaktive Schicht | 144 | Dreieck |
| 116 | Innenkanalfläche | 146 | Verbindungselement |
| 118 | Membranaußenfläche | 148 | Verbindungselement |
| 120 | mittlerer Bereich | 150 | Verbindungselement |
| 122 | Ecke | | |
| 124 | Ecke | | |

## Patentansprüche

1. Spinndüseneinheit, insbesondere zur Herstellung einer Mehrkanalmembran,
- mit zumindest einer Extrusionseinheit (26a; 26b; 26c), die zur Führung einer Polymerlösung zumindest einen Extrusionsraum (28a; 28b; 28c) ausbildet, und
- mit zumindest einer Innenfluideinbringeinheit (30a; 30b; 30c), die zur Führung eines Innenfluids zumindest zwei innerhalb des Extrusionsraums (30a; 30b; 30c) angeordnete Kanäle (32, 34, 36) aufweist,
- wobei die Innenfluideinbringeinheit (30a; 30b; 30c) zumindest ein Stützelement (38a; 38b, 40b, 42b; 38c, 40c, 42c) aufweist, das innerhalb des Extrusionsraums (28a; 28b; 28c) angeordnet ist,
- wobei die Innenfluideinbringeinheit (30a; 30b; 30c) zumindest eine Innenfluidaustrittsöffnung (48a, 50a, 52a; 48b, 50b, 52b; 48c, 50c, 52c) aufweist, die innerhalb des Extrusionsraums (28a; 28b; 28c) angeordnet ist,
- wobei die Extrusionseinheit (26a; 26b; 26c) zumindest einen Polymerlösungszulauf (44a; 44b) aufweist und dass zumindest das eine Stützelement (38a; 38b, 40b, 42b; 38c, 40c, 42c) in einer Extrusionsrichtung (46a; 46b; 46c) nach dem Polymerlösungszulauf (44a; 44b) angeordnet ist,
- wobei die Extrusionseinheit (26a) zumindest eine Polymerlösungsaustrittsöffnung (54a) aufweist und das Stützelement (38a) zumindest eine Durchgangsöffnung (56a) aufweist, die dazu vorgesehen ist, den Polymerlösungszulauf (44a) und die Polymerlösungsaustrittsöffnung (54a) strömungstechnisch zu verbinden,
- wobei das zumindest eine Stützelement (38b, 40b, 42b; 38c, 40c, 42c) stegförmig ausgebildet ist,
- wobei der Extrusionsraum (28a; 28b; 28c) zumindest teilweise trichterförmig ausgebildet ist,
- wobei die Polymerlösung die Spinndüseneinheit aus der Polymerlösungsaustrittsöffnung (54a) verlässt,
**dadurch gekennzeichnet,**
- **dass** die Innenfluidaustrittsöffnungen (48a, 50a, 52a) alle in der Extrusionsrichtung (64a) vor der Polymerlösungsaustrittsöffnung (54a) angeordnet sind, und
- **dass** die Innenfluidaustrittsöffnungen (48a, 50a, 52a) alle innerhalb des trichterförmigen Polymerlösungsablaufraums (88a) angeordnet sind.

2. Verfahren zur Herstellung einer Mehrkanalmembran, insbesondere zur Flüssigkeitsaufbereitung, mittels einer Spinndüseneinheit nach Anspruch 1,
- bei dem eine Polymerlösung zur Ausbildung einer Membranaußenfläche (10a) der Mehrkanalmembran extrudiert wird,
- wobei zur Ausbildung einer Membraninnenfläche (12a) der Mehrkanalmembran die Polymerlösung zwischen zumindest zwei Kanälen (32a, 34a, 36a; 32b, 34b, 36b; 32c, 34c, 36c) extrudiert wird und durch die zumindest zwei Kanäle (32a, 34a, 36a; 32b, 34b, 36b; 32c, 34c, 36c) ein Innenfluid geführt wird, welches von der extrudierenden Polymerlösung strömungstechnisch getrennt ist,
- wobei die Membraninnenfläche (12a) und die Membranaußenfläche (10a) der Mehrkanalmembran jeweils eine trennaktive Schicht (20a, 22a) bilden,
- wobei ein einziges Koaguliermittel verwendet wird und die Polymerlösung direkt in das Koaguliermittel extrudiert wird,
- wobei die Polymerlösung die Spinndüseneinheit aus der Polymerlösungsaustrittsöffnung (54a) verlässt,
**dadurch gekennzeichnet,**
- **dass** die Innenfluidaustrittsöffnungen (48a, 50a, 52a) alle in der Extrusionsrichtung (64a) vor der Polymerlösungsaustrittsöffnung (54a) angeordnet sind, und
- **dass** die Innenfluidaustrittsöffnungen (48a, 50a, 52a) alle innerhalb eines trichterförmig ausgestalteten Polymerlösungsablaufraums (88a) angeordnet sind.

3. Verfahren nach Anspruch 2,
**dadurch gekennzeichnet, dass**
das Innenfluid zumindest teilweise dem Koaguliermittel entspricht.

4. Verfahren nach Anspruch 2 oder 3,
**dadurch gekennzeichnet, dass**
Wasser als Koaguliermittel verwendet wird.

5. Verwendung der Spinndüseneinheit nach Anspruch 1 zum Herstellen einer Mehrkanalmembran, insbesondere zur Flüssigkeitsaufbereitung,
- wobei die Mehrkanalmembran zumindest eine Membranaußenfläche (10a) und eine Membraninnenfläche (12a) aufweist, die zumindest zwei längs verlaufende Innenkanäle (14a, 16a, 18a) ausbildet, die von der Membranaußenfläche (10a) umgeben sind,
- wobei die Membranaußenfläche (10a) und die Membraninnenfläche (12a) jeweils eine trennaktive Schicht (20a, 22a) ausbilden,
- wobei eine mittlere Porengröße der trennaktiven Schicht (20a) der Membranaußenfläche (10a) sich von einer mittleren Porengröße der trennaktiven Schicht (22a) der Membraninnenfläche (12a) unterscheidet.

6. Verwendung nach Anspruch 5,
**dadurch gekennzeichnet, dass**
die Membraninnenfläche (12a) drei Innenkanäle (14a, 16a, 18a) ausbildet.

7. Verwendung nach Anspruch 5 oder 6,
**gekennzeichnet durch**
eine Stützschicht (24a), die von der trennaktiven Schicht (20a) an der Membranaußenfläche (10a) umgeben ist und die die trennaktive Schicht (22a) an der Membraninnenfläche (12a) umgibt, wobei die Stützschicht (24a) eine zumindest im Wesentlichen konstante Porosität aufweist.

8. Verwendung nach Anspruch 7,
**dadurch gekennzeichnet, dass**
eine mittlere Porengröße der trennaktiven Schichten (20a, 22a) zumindest um etwa das zehnfache kleiner ist als eine mittlere Porengröße der Stützschicht (24a).

## Claims

1. Spinneret unit, in particular for producing a multi-channel membrane,
- with at least one extrusion unit (26a; 26b; 26c) forming at least one extrusion space (28a; 28b; 28c) for conducting a polymer solution, and
- with at least one internal-fluid feeding-in unit (30a; 30b; 30c) comprising at least two channels (32, 34, 36) for conducting an internal fluid, which are arranged inside the extrusion space (30a; 30b; 30c),
- wherein the internal-fluid feeding-in unit (30a; 30b; 30c) comprises at least one support element (38a; 38b, 40b, 42b; 38c, 40c, 42c) which is arranged inside the extrusion space (28a; 28b; 28c),
- wherein the internal-fluid feeding-in unit (30a; 30b; 30c) comprises at least one internal fluid exit opening (48a, 50a, 52a; 48b, 50b, 52b; 48c, 50c, 52c), which is arranged inside the extrusion space (28a; 28b; 28c),
- wherein the extrusion unit (26a; 26b; 26c) comprises at least one polymer solution feed (44a; 44b) and the at least one support element (38a; 38b, 40b, 42b; 38c, 40c, 42c) is arranged in an extrusion direction (46a; 46b; 46c) downstream of the polymer solution feed (44a; 44b),
- wherein the extrusion unit (26a) comprises at least one polymer solution exit opening (54a) and the support element (38) comprises at least one pass-through opening (56a), which is configured to fluidically connect the polymer solution feed (44a) and the polymer solution exit opening (54a),
- wherein the at least one support element (38b, 40b, 42b; 38c, 40c, 42c) is embodied in the shape of a bar,
- wherein the extrusion space (28a; 28b; 28c) is embodied at least partly in a funnel shape,
- wherein the polymer solution leaves the spinneret unit byf the polymer solution exit opening (54a),
**characterised in that** all the internal fluid exit openings (48a, 50a, 52a) are arranged in the extrusion direction (64a) upstream of the polymer solution exit opening (54a) and that all the internal fluid exit openings (48a, 50a, 52a) are arranged inside the funnel-shaped polymer solution drainage space (88a).

2. Method for the production of a multi-channel membrane, in particular for a treatment of liquids, by means of a spinneret unit according to claim 1,
- in which a polymer solution is extruded for a formation of an outer membrane surface (10a) of the multi-channel membrane,
- wherein, for a formation of an inner membrane surface (12a) of the multi-channel membrane, the polymer solution is extruded between at least two channels (32a, 34a, 36a; 32b, 34b, 36b; 32c, 34c, 36c), and an internal fluid, which is fluidically separate from the extruding polymer solution, is conducted through the at least two channels (32a, 34a, 36a; 32b, 34b, 36b; 32c, 34c, 36c),
- wherein the inner membrane surface (12a) and the outer membrane surface (10a) of the multi-channel membrane each form a actively separating layer (20a, 22a),
- wherein one single coagulation agent is used and the polymer solution is extruded directly into the coagulation agent,
- wherein the polymer solution leaves the spinneret unit by the polymer solution exit opening (54a),
**characterised in that** all the internal fluid exit openings (48a, 50a, 52a) are arranged in the extrusion direction (64a) upstream of the polymer solution exit opening (54a) and that all the internal fluid exit openings (48a, 50a, 52a) are arranged inside a polymer solution drainage space (88a) that is realized in a funnel shape.

3. Method according to claim 2,
**characterised in that** the internal fluid corresponds at least partly to the coagulation agent.

4. Method according to claim 2 or 3,
**characterised in that** water is used as the coagulation agent.

5. Usage of the spinneret unit according to claim 1 for producing a multi-channel membrane, in particular for a treatment of liquids,
- wherein the multi-channel membrane comprises at least one outer membrane surface (10a) and an inner membrane surface (12a) that forms at least two longitudinally-extending inner channels (14a, 16a, 18a), which are surrounded by the outer membrane surface (10a),
- wherein the outer membrane surface (10a) and the inner membrane surface (12a) each form a actively separating layer (20a, 22a),
- wherein an average pore size of the actively separating layer (20a) of the outer membrane surface (10a) differs from an average pore size of the actively separating layer (22a) of the inner membrane surface (12a).

6. Usage according to claim 5,
**characterised in that** the inner membrane surface (12a) forms three inner channels (14a, 16a, 18a).

7. Usage according to claim 5 or 6,
**characterised by** a support layer (24a), which is surrounded by the actively separating layer (20a) on the outer membrane surface (10a) and which surrounds the actively separating layer (22a) on the inner membrane surface (12a), the support layer (24a) having an at least substantially constant porosity.

8. Usage according to claim 7,
**characterised in that** an average pore size of the actively separating layers (20a, 22a) is at least ten times smaller than an average pore size of the support layer (24a).

## Revendications

1. Unité de filière, en particulier pour la fabrication d'une membrane multi-canaux,
- avec au moins une unité d'extrusion (26a ; 26b ; 26c), qui forme au moins un espace d'extrusion (28a ; 28b ; 28c) pour convoyer une solution polymérique, et
- avec au moins une unité d'amenée de fluide intérieur (30a ; 30b ; 30c), qui comporte au moins deux canaux (32, 34, 36) disposés dans l'espace d'extrusion (30a ; 30b ; 30c) pour convoyer un fluide intérieur,
- l'unité d'amenée de fluide intérieur (30a ; 30b ; 30c) comprenant au moins un élément supporteur (38a ; 38b, 40b, 42b ; 38c, 40c, 42c), qui est disposé dans l'espace d'extrusion (28a ; 28b ; 28c),
- l'unité d'amenée de fluide intérieur (30a ; 30b ; 30c) comprenant au moins une ouverture de sortie de fluide intérieur (48a, 50a, 52a ; 48b, 50b, 52b ; 48c, 50c, 52c) disposée dans l'espace d'extrusion (28a ; 28b ; 28c),
- où l'unité d'extrusion (26a ; 26b ; 26c) comporte au moins un moyen d'amenée de solution polymérique (44a ; 44b) et l'au moins un élément supporteur (38a ; 38b, 40b, 42b ; 38c, 40c, 42c) est disposé dans une direction d'extrusion (46a ; 46b ; 46c) en aval du moyen d'amenée de solution polymérique (44a ; 44b),
- où l'unité d'extrusion (26a) comporte au moins une ouverture de sortie de solution polymérique (54a) et l'élément supporteur (38a) comprend au moins une ouverture de passage (56a) prévue pour fluidiquement connecter le moyen d'amenée de solution polymérique (44a) et l'ouverture de sortie de solution polymérique (54a),
- où l'au moins un élément supporteur (38b, 40b, 42b ; 38c, 40c, 42c) est réalisé en forme d'entretoise,
- où l'espace d'extrusion (28a ; 28b ; 28c) est réalisé au moins partiellement en forme de trémie,
- où la solution polymérique sort de l'unité de filière par l'ouverture de sortie de solution polymérique (54a),
**caractérisée en ce que** toutes les ouvertures de sortie de fluide intérieur (48a, 50a, 52a) sont disposées dans la direction d'extrusion (64a) en amont de l'ouverture de sortie de solution polymérique (54a)
et que toutes les ouvertures de sortie de fluide intérieur (48a, 50a, 52a) sont disposées dans l'espace de drainage de solution polymérique en forme de trémie (88a).

2. Procédé pour produire une membrane multi-canaux, en particulier pour le traitement de liquides, moyennant une unité de filière selon la revendication 1,
- dans lequel une solution polymérique est extrudée pour la formation d'une surface-membrane extérieure (10a) de la membrane multi-canaux,
- où pour la formation d'une surface-membrane intérieure (12a) de la membrane multi-canaux la solution polymérique est extrudée entre au moins deux canaux (32a, 34a, 36a ; 32b, 34b, 36b ; 32c, 34c, 36c) et un fluide intérieur, qui est fluidiquement séparé de la solution polymérique en extrusion, est convoyé par les au moins deux canaux (32a, 34a, 36a ; 32b, 34b, 36b ; 32a, 32b, 36c),
- où chacune de la surface-membrane intérieure (12a) et la surface-membrane extérieure (10a) de la membrane multi-canaux forme une couche active en séparation (20a, 22a),
- où un seul agent de coagulation est utilisé et la solution polymérique est extrudée directement dans l'agent de coagulation,
- où la solution polymérique sort de l'unité de filière par l'ouverture de sortie de solution polymérique (54a),
**caractérisé en ce que** les ouvertures de sortie de fluide intérieur (48a, 50a, 52a) sont toutes disposées dans la direction d'extrusion (64a) en amont de l'ouverture de sortie de solution polymérique (54a)
et que les ouvertures de sortie de fluide intérieur (48a, 50a, 52a) sont toutes disposées dans un espace de drainage de solution polymérique en forme de trémie (88a).

3. Procédé selon la revendication 2,
**caractérisé en ce que** le fluide intérieur correspond au moins partiellement à l'agent de coagulation.

4. Procédé selon la revendication 2 ou 3,
**caractérisé en ce que** de l'eau est utilisée comme agent de coagulation.

5. Usage de l'unité de filière selon la revendication 1 pour produire une membrane multi-canaux, en particulier pour le traitement de fluides,
où la membrane multi-canaux comprend au moins une surface-membrane extérieure (10a) et une surface-membrane intérieure (12a) qui forme au moins deux canaux intérieurs (14a, 16a, 18a) s'étendant en longueur et entourés de la surface-membrane extérieure (10a),
- où la surface-membrane extérieure (10a) et la surface-membrane intérieure (12a) forment respectivement une couche active en séparation (20a, 22a),
- où une taille des pores moyenne de la couche active en séparation (20a) de la surface-membrane extérieure (10a) diffère d'une taille des pores moyenne de la couche active en séparation (22a) de la surface-membrane intérieure (12a).

6. Usage selon la revendication 5,
**caractérisé en ce que** la surface-membrane intérieure (12a) forme trois canaux intérieurs (14a, 16a, 18a).

7. Usage selon la revendication 5 ou 6,
**caractérisé par** une couche de support (24a) entourée par la couche active en séparation (20a) sur la surface-membrane extérieure (10a) et entourant la couche active en séparation (22a) sur la surface-membrane intérieure (12a), la couche de support (24a) ayant une porosité au moins sensiblement constante.

8. Usage selon la revendication 7,
**caractérisé en ce que** la taille des pores moyenne des couches actives en séparation (20a, 22a) est environ dix fois inférieure à une taille des pores moyenne de la couche de support (24a).
